(19) Europäisches Patentamt

European Patent Office

Office européen des brevets

(11) **EP 2 071 785 B1**

(12) **EUROPEAN PATENT SPECIFICATION**

(45) Date of publication and mention
of the grant of the patent:
**05.05.2021 Bulletin 2021/18**

(51) Int Cl.:
*H04L 25/02* (2006.01)      *H04L 25/03* (2006.01)

(21) Application number: **08000644.8**

(22) Date of filing: **15.01.2008**

(54) **Blind channel estimation**

Blinde Kanalschätzung

Estimation de canal aveugle

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **14.12.2007 EP 07024345**

(43) Date of publication of application:
**17.06.2009 Bulletin 2009/25**

(73) Proprietor: **Vodafone Holding GmbH**
**40213 Düsseldorf (DE)**

(72) Inventors:
- **Rave, Wolfgang**
  **01705 Freital-Pesterwitz (DE)**
- **Fonseca dos Santos, Andre**
  **01187 Dresden (DE)**
- **Fettweis, Gerhard, Prof. Dr. Ing.**
  **01326 Dresden (DE)**

(74) Representative: **Jostarndt Patentanwalts-AG**
**Philipsstrasse 8**
**52068 Aachen (DE)**

(56) References cited:
- **Yu Gong, Zhiguo Ding, T. Ratnarajah and Colin F. N. Cowan: "A Novel Channel Estimator for a Superposition-based Cooperative System", 14th European Signal Processing Conference (EUSIPCO 2006), Florence, Italy, September 4-8, 2006 , 8 September 2006 (2006-09-08), 8 September 2006 (2006-09-08), XP002631493, Retrieved from the Internet: URL:http://www.eurasip.org/proceedings/eusipco/eusipco2006/papers/1568981740.pdf [retrieved on 2011-04-06]**

- **SCHERB A ET AL: "On phase correct blind deconvolution of flat MIMO channels exploiting channel encoding", 2005 IEEE INTERNATIONAL CONFERENCE ON ACOUSTICS, SPEECH, AND SIGNAL PROCESSING (IEEE CAT. NO.05CH37625) IEEE PISCATAWAY, NJ, USA, IEEE, PISCATAWAY, NJ, vol. 3, 23 March 2005 (2005-03-23), pages III-1045, XP002536153, ISBN: 978-0-7803-8874-1**

- **SCHERB A ET AL: "Blind Identification and Equalization of LDPC-encoded MIMO Systems", 2005 IEEE 61ST VEHICULAR TECHNOLOGY CONFERENCE. VTC2005- SPRING - 30 MAY-1 JUNE 2005 - STOCKHOLM, SWEDEN, IEEE, PISCATAWAY, NJ, USA, vol. 1, 30 May 2005 (2005-05-30), pages 562-566, XP010855457, DOI: DOI:10.1109/VETECS.2005.1543354 ISBN: 978-0-7803-8887-1**

- **SCHERB A ET AL: "On phase correct blind deconvolution exploiting channel coding", SIGNAL PROCESSING AND INFORMATION TECHNOLOGY, 2003. ISSPIT 2003. PROCE EDINGS OF THE 3RD IEEE INTERNATIONAL SYMPOSIUM ON DARMSTADT, GERMANY 14-17 DEC. 2003, PISCATAWAY, NJ, USA,IEEE, 14 December 2003 (2003-12-14), pages 518-521, XP010729206, ISBN: 978-0-7803-8292-3**

- **DOS SANTOS A F ET AL: "Blind turbo multipath channel estimation of PAM signals exploiting multilevel codes", INFORMATION THEORY WORKSHOP, 2008. ITW '08. IEEE, IEEE, PISCATAWAY, NJ, USA, 5 May 2008 (2008-05-05), pages 353-357, XP031291415, ISBN: 978-1-4244-2269-2**

**Description**

The present invention relates to a method and a transceiver for data communication.

The invention relates especially to a method and a transceiver for processing data for transmission in a wireless communication system using selective channel transmission.

**Background**

Multi-channel communication systems are known from the state of the art.

They are used to increase transmission capacity for different types of information, especially data, voice, images and videos.

Such a multi-channel system may be a multiple-input multiple-output (MIMO) communication system, an orthogonal frequency division modulation (OFDM) system, a MIMO system that utilizes OFDM, or some other types of system. A MIMO system employs multiple transmit antennas and multiple receive antennas to exploit spatial diversity to support a number of spatial sub channels, each of which may be used to transmit data. An OFDM System effectively partitions the operating frequency and into a number of frequency sub channels (or frequency bins), each of which is associated with a respective sub channel on which data may be modulated. A multi-channel communication system thus supports a number of "transmission" channels, each of which may correspond to a spatial sub channel in a MIMO system, a frequency sub channel in an OFDM system, or a spatial sub channel of a frequency sub channel in a MIMO system that utilizes OFDM.

The transmission channels of a multi-channel communication system might experience different link conditions (e.g., due to different fading and multipath effects) and may achieve different signal-to-noise-plus-interference ratios (SNRs). Consequently, the transmission capacities (i.e., the information bit rates) that may be supported by the transmission channels for a particular level of performance may be different from channel to channel. Moreover, the link conditions typically vary over time. As a result, the bit rates supported by the transmission channels also vary with time.

The article "A novel channel estimator for a superposition-based cooperative system", presented at 14th European Signal Processing Conference in Florence, Italy, on September 4-8, 2006 by Y.Gong et al. discloses investigations on channel estimation and equalization for the relay node of a cooperative diversity system based on superposition modulation. Exploring the superposition structure of the transmission data, a channel estimator for a relay node is proposed. Without any pilot sequence, the proposed estimator can converge to the ideal case as if the transmission data is known to the receiver. Also soft-input-soft-output MMSE equalizers were re-derived to match the superimposed data structure of the cooperative scheme. The proposed algorithms were verified by computer simulations.

In addition, in the article "On phase correct blind deconvolution exploiting channel coding" by A. SCHERB ET AL, published in SIGNAL PROCESSING AND INFORMATION TECHNOLOGY, 2003. ISSPIT 2003. PROCEEDINGS OF THE 3RD IEEE INTERNATIONAL SYMPOSIUM ON DARMSTADT, GERMANY 14-17 DEC. 2003, PIS-CATAWAY, NJ, USA, IEEE, 14 December 2003 (2003-12-14), pages 518-521, XP010729206, ISBN: 978-0-7803-8292-3, an algorithm for estimating the channel blindly is disclosed. The disclosed algorithm exploits the statistical dependencies of the transmitted signal caused by channel coding. An additional feature of the described algorithm is that, in contrast to most blind deconvolution algorithms, phase correct estimates are expected to be obtained.

It is an objective of the current invention to derive a simple blind channel estimator for a channel coefficient.

The different transmission capacities of the channels and the time-variant nature of these capacities make it challenging to provide an effective coding and modulation scheme.

**Summary of the invention**

Therefore, it is an object of the present invention, to allow for a more reliable and/or flexible data transmission.

According to the invention, this object is achieved by a method according to claim 1 and a transceiver according to claim 2. The invention is solely defined by the appended claims.

With respect to the turbo codes a use of iterative systems if useful in various scenarios. One example is Turbo Equalization where a Soft Input Soft Output equalizer exchanges extrinsic information with a Soft Input Soft Output decoder. The Turbo Equalizer can mitigate completely the Intersymbol Interference (ISI) effect. However, usually the literature has assumed perfect knowledge of the impulse response of the multipath channel, which is not possible in practical applications. Conventionally, the channel's impulse response is estimated with the use of pilots, which might not be efficient in terms of spectral efficiency. One alternative for increasing the spectral efficiency is to use blind channel estimation with turbo equalization. When blind channel estimation is used, the taps of the channel are estimated based on the properties of the transmitted signal.

Concerning the turbo codes the document [2] is implemented with reference.

Furthermore implemented by references are the documents [1] A. F. Santos, W Rave, and G. Fettweis. Blind Turbo Channel Estimation Exploiting Parity Check Equations. 7th International ITG Conference on Source and Channel Coding (SCC 08), accepted for publication, 2008. [2] C. Berrou, A. Glavieux, and P. Thitimajshima. Near Shannon limit error-correcting coding and decoding: Turbo-codes. IEEE Int. Conf. on Communications, ICC'93, Geneva, 2, 1993. [3] C. Douillard, M. Jezequel, C. Berrou, A. Picart, P. Didier, and A. Glavieux. Iterative correction of intersymbol interference: Turboequalization. European Trans. on Telecommunications, 6(5):507-511,1995. [4] M. T¨uchler, R. Koetter, and AC Singer. Turbo equalization: principles and new results. IEEE Trans. on Communications, 50(5):754-767, 2002. [5] G.B. Giannakis, Y. Hua, P. Stoica, and L. Tong. Signal ProcessingAdvances in Wireless and Mobile Communications: Trends in Channel Estimation and Equalization, volume 1. Prentice-Hall Inc., 2001. [6] A. Scherb, V. Kuhn, and K.D. Kammeyer. On phase correct blind deconvolution exploiting channel coding. IEEE International Symposium on Signal Processing and Information Technology, 2003. [7] A. Scherb, V. Kuhn, and K.D. Kammeyer. On Phase Correct Blind Deconvolution of Flat MIMO Channels Exploiting Channel Encoding. Acoustics, Speech, and Signal Processing, 2005. Proceedings.(ICASSP'05). IEEE International Conference on, 3, 2005. [8] W. Rave, A. F. Santos, and G. Fettweis. Statistics of a Blind Channel Estimator based on 'Logic Strings. 7th International ITG Conference on Source and Channel Coding (SCC 08), accepted for publication, 2008. [9] CJ Le Martret and GB Giannakis. Alldigital PAM impulse radio for multiple-access throughfrequency-selective multipath. Global Telecommunications Conference, 2000. GLOBECOM'00. IEEE, 1, 2000. [10] K. Kansanen. Wireless broadband single-carrier systems with MMSE turbo equalization receivers. Ph.D. thesis, University of Oulu, 2005. [11] S.S. ten Brink and J.R.H. Yan. Iterative demapping and decoding for multilevel modulation. Global Telecommunications Conference, 1998. GLOBECOM 98. The Bridge to Global Integration. IEEE, 1, 1998.

Therefore it is especially possible to include features of the section "statistics of a blind channel estimator based on logic strings" on of the section "on phase correct blind deconvolution exploiting channel coding" and the therein contained features with features from other sections of the current application.

For a survey on existing algorithms exploiting signal statistics for blind channel estimation see [5]. In [6] and [7] the authors proposed a blind channel estimator based on the properties imposed by a channel code on a BPSK sequence. In [8] it was analytically derived the variance of this estimator and showed how the estimate depends on frame length, code properties and the channel impulse response. In [1] an algorithm which exploits the statistics of a BPSK encoded sequence and the feedback of soft symbols from the channel decoder was derived. Hence, the receiver performs iterations between blind channel estimator, equalizer and decoder in a turbo way.

According to a preferred example it is useful to extend the algorithm of [1] to PAM signals. Such an extension is non trivial since amplitude ambiguities arises from the use of PAM signals. The extension of the blind channel estimator is of interest mainly for two reasons: PAM modulation is considered for UWB transmission [9] and it is an intermediate stage of evolution for blind channel estimation of QAM signals since it can be decomposed into two independent PAM signals.

## Brief description of the drawings

Reference will be made by way of example to the accompanying drawings in which

Fig. 1 shows a schematic presentation of a transmitter chain with Q levels.

Fig. 2 shows an example of a composition of a signal with multilevel coding (4-PAM modulation).

Fig. 3 shows an example of a soft information exchange between blind channel estimator, frequency domain equalizer and MAP decoder for a 4-PAM signal.

Fig. 4 shows an example of a BER of the blind turbo equalizer.

Fig. 5 shows an example of a MSE in dB of the channel estimation error.

Fig. 6 shows an example of a transmitter and receiver chain.

Fig. 7 shows an example of a soft information exchange between blind channel estimator, frequency domain equalizer and MAP decoder.

Fig. 8 shows an example of a comparison of the MMSE of the estimated channel for Scenario 1 between the proposed blind turbo equalizer, the pilot-aided and the turbo equalizer with perfect knowledge.

Fig. 9 shows an example of a comparison of the BER for Scenario 1 between the proposed blind turbo equalizer, the pilot-aided and the turbo equalizer with perfect knowledge.

Fig. 10 shows an example of a comparison of the MMSE of the estimated channel for Scenario 2 between the proposed blind turbo equalizer, the pilotaided and the turbo equalizer with perfect knowledge.

Fig. 11 shows an example of a comparison of the BER for Scenario 2 between the proposed blind turbo equalizer, the pilot-aided and the turbo equalizer with perfect knowledge.

Fig. 12 shows a schematic presentation of a utilization of an equalizer according to the invention.

Fig. 13 shows an example of a cchannel estimation in the noiseless case for the 3 tap channel $h = [1, 2, 1]/\sqrt{6}$: Numerical estimates of the 5th moments of the stronger tap $h_1$ (top) and the weaker tap $h_0$ using the [7, 5] code. The thick lines show the Gaussian approximation using Eq. 40).

Fig. 14 shows an example of a channel estimation in the noisy case for the 3 tap channel $h = [1, 2, 1]/\sqrt{6}$: Numerical estimates for first (top) and second tap using the [7, 5] code for SNR = 0 dB.

Fig. 15 shows an example of a transformation of the Gaussian r.v. $\varepsilon_v$ to $\hat{h}_v = \xi_v^{1/M}$ for the estimator variance $\sigma_\xi = 0.01$ (top). The numerically computed distribution of $\hat{h}_1$ at SNR = 0 dB (bottom) corresponding to Fig. 14 agrees very well with the prediction according to Eq. (34).

Fig. 16 shows an example of a transformation of mean and variance of the Gaussian r.v. $\xi_v$ for M = 5 to the corresponding mean and variance of $\hat{h}_v$.

Fig. 17 shows an example of a transformation of mean and variance of the Gaussian r.v.

$\xi_v$ to $\hat{h}_v = \xi^{1/M}$ for $M$ = 3,5,7,9.

Fig. 18 shows an example of a MSE channel estimation error compared for different convolution codes with logic strings of lengths 3, 5, 7 and 9.

Fig. 19 shows an example of an estimation of a complex channel impulse response

$$(h = e^{j\pi/3}[1, 2, 1]/\sqrt{6}):$$

Numerical evaluation of the amplitude distribution of the 5th moment of the strongest tap (top) and the projected tap distribution $\hat{h}_1$ derived from it (bottom).

Fig. 20 shows an example of a System Model.

Fig. 21 shows an example of a relation between NMSE vs. SNR.

## Detailed Description of preferred embodiments of the invention according to the figures

The invention can be integrated into different communication and handling standards. In order to facilitate an integration of the invention in current communication systems, it is especially useful to use the invention in environments according to at least one communication standard.

Those skilled in the art understand that the descriptions according to the examples can be transferred to other types of data treatment and data handling.

An example uses a $2^Q$-order modulation with multilevel code transmission.

In an example a 2Q-PAM modulation with multilevel code transmission is utilized.

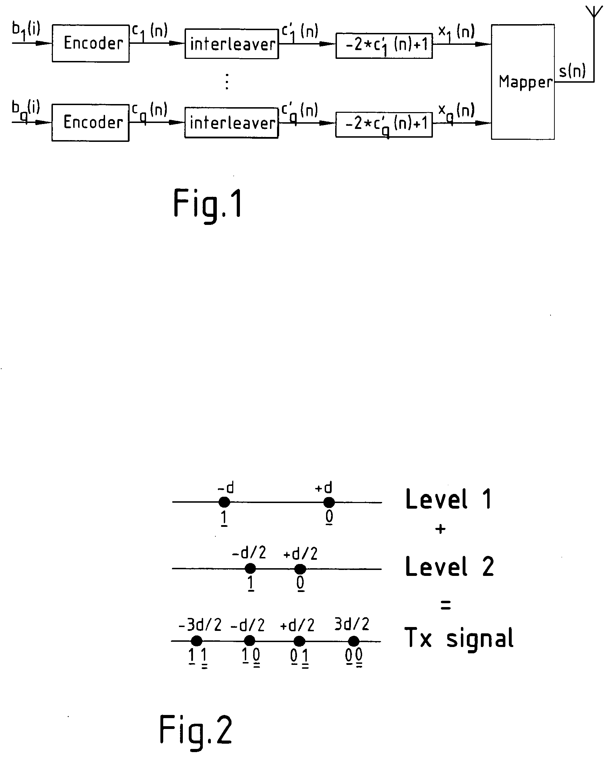

Figure 1 shows a transmitter with Q levels. Each level q is independently encoded. First the vector of information bits $b_q = [b(1),......,b_q(i), ......, b_q(I)]^T$ of the $q$ -th level is encoded by an asymmetric code. The vector of coded bits of the q-th level, $c_q =[c_q(1),.......,c_q(n),.......,c_q(N)]^T$, is permuted by a random interleaver. The antipodal coded interleaved bits

$x_q(n)$ are mapped by a multilevel modulator.

The signal is composed by two levels which correspond to two BPSK signals as shown in Figure 2. The first level has a minimum distance of 2d and the second one of d.

Fig. 2 shows an example of a 4-PAM modulation with multilevel coding.

The 4-PAM signal is the sum of the two BPSK signals and has a minimum distance of d.

Considering the vector $x(n) = [x_1(n),...,x_q(n),..x_Q(n)]^T$, the mapping function of $x(n) \rightarrow s(n)$ is given by:

$$s(n) = \mathbf{z}^T \mathbf{x}(n) \qquad (1)$$

where $z = [z_1,...,z_q,...,z_Q]^T$ corresponds to the amplitude of each level and $z^H z = 1$. The elements of the vector $z$ are given by:

$$z_q = 2^{Q-q-1} d. \qquad (2)$$

The signal $s(n)$ is transmitted through a multipath channel with impulse response $h = [h(1),........h(l), ......h(L)]^T$, and AWGN noise $w(n)$ with variance $\sigma^2 = N_0 / 2$ is added:

$$s(n) = \sum_{i=0}^{L-1} h(i)s(n-i) + w(n) \qquad (3)$$

From this point on we are going to use the shorthand notation $h_l = h(l)$ for the tap values of the channel.

Finally, the received signal $r(k)$ is detected by the Blind Turbo Equalizer.

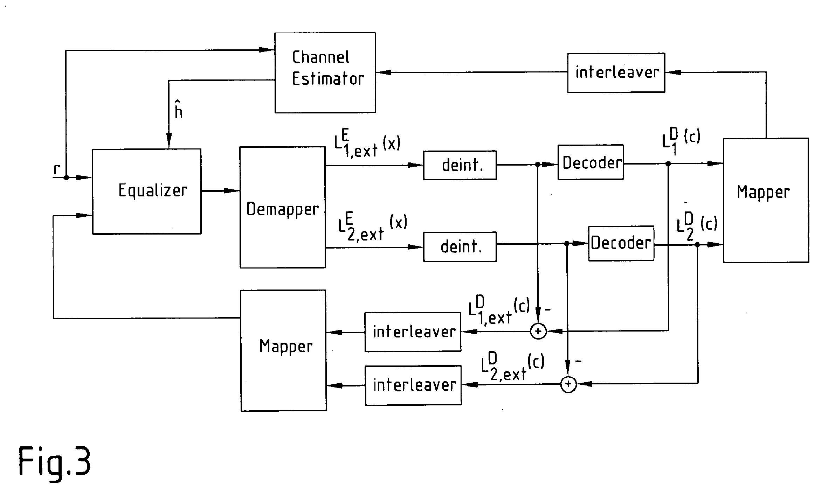

Fig. 3 contains a schematic presentation of a preferred embodiment of the invention with a utilization of an equalizer and a channel estimator.

Fig. 3 implements soft information exchange between the blind channel estimator, a frequency domain equalizer and a MAP decoder for a 4-PAM signal.

Figure 3 depicts the iterative receiver of a 4-PAM signal as an example. First, the received signal is used for estimating the channel and for equalization. The equalizer with the demapper computes the extrinsic information of each level, $L_{q,ext}^E(\mathbf{x})$ ($q$ denotes the level, $E$ an output of the equalizer and *extrinsic information*). Any soft input or soft output equalizer can be used. The extrinsic information of each level, $L_{q,ext}^E(\mathbf{s})$, is deinterleaved and used as a-priori information for the decoders (see Figure 3). Each decoder computes the a-posteriori information, $L_q^D(\mathbf{c})$, and the extrinsic information, $L_{q,ext}^D(\mathbf{c})$, of the coded bits. The interleaved extrinsic information of the coded bits is mapped and used as a-priori information of the equalizer and the a-posteriori value is used by the channel estimator. Notice that the total a-posteriori information of the decoder can be used for the channel estimator since the values of s are uncorrelated with the values of the a-priori information. Throughout the iterations the quality of the output of the equalizer, the decoder and the channel estimator are refined until the system shows no improvement any more or the maximum number of iterations is reached.

A further example includes a blind channel estimation using code properties.

This implementation includes an algorithm for blindly estimating the channel. In [1] a blind turbo equalizer is proposed using the statistics of the encoded signals for BPSK modulation. At the iteration 0 (when no a-priori information from the decoder is available) a slightly modified version of [6] is used for blind channel estimation.

For the subsequent iterations an algorithm using the feedback from the channel decoder and the code constraints is proposed.

When the channel is blindly estimated, it is necessary to have a one-to-one mapping between the received signal and the impulse response of the channel. If the channel encoder is symmetric (i.e. a code which can produce a valid codeword that is the negation of another codeword in the codeword space) we have a phase ambiguity of 180° for one-dimensional modulations. One solution for this ambiguity is to use an asymmetric transmission, which can be achieved by using asymmetric codes [6] [1]. The use of asymmetric codes (i.e. codes where the negation of each valid codeword is not a valid codeword in the codeword space) solves the ambiguity problem [6]. The condition that a code must fulfil to be asymmetric is that the rows of the parity check matrix of the code have an odd numbers of ones. Therefore, a wide range of common channel codes is asymmetric. One example of an asymmetric code is the (7, 5)8 convolutional code. The use of asymmetric codes solves the phase ambiguity but does not solve the amplitude ambiguity of PAM signals. In the next section we show an algorithm which exploits the properties of an asymmetric code for solving the phase and amplitude ambiguity for PAM signals.

It is furthermore useful to integrate statistics of multilevel encoded signals.

To use the constraints of a channel code for estimating the channel, we first analyse the stream of bits for a particular level q. A binary linear block code in the q-th level is characterized by its generator matrix, $G_q \in [0, 1]^{N \times l}$, and parity check matrix, $H_q \in [0, 1]^{M \times N}$:

$$\mathbf{c}_q = \mathbf{G}_q \mathbf{b}_q, \tag{4}$$

$$\mathbf{H}_q \mathbf{c}_q = \mathbf{0}, \tag{5}$$

where the operations are performed over GF(2). Therefore we can use the constraints imposed by the code, i.e the parity check matrix, to estimate the channel. Let the

$$\mathcal{A}_q = \left\{ \left[ \lambda_{m,1}^q, \ldots, \lambda_{m,p}^q, \ldots, \lambda_{m,P_q}^q \right] \right\}$$

be the set of M vectors (subsets) with the *indices* of the nonzero elements of the mth row of the parity check matrix. Hence, check equation m can be formulated as:

$$\sum_{i=1}^{P_q} c_q(\lambda_{m,i}^q) = 0; \qquad \{\lambda_{m,1}^q, \ldots, \lambda_{m,P_q}^q\} \in \mathcal{A}_q. \tag{6}$$

Assuming further the information bits to be i.i.d. causes that sums (taken over GF (2) of arbitrary code bits (i.e. $\{k1, \ldots, kPq\}\, l \in A_q$) are equally probable to be 0 or 1:

$$\Pr\left( \sum_{\substack{i=1 \\ \{k_1, \ldots, k_{P_q}\} \notin \mathcal{A}_q}}^{P_q} c_q(k_i) = 0 \right) = \Pr\left( \sum_{\substack{i=1 \\ \{k_1, \ldots, k_{P_q}\} \notin \mathcal{A}_q}}^{P_q} c_q(k_i) = 1 \right) = \frac{1}{2}. \tag{7}$$

It is possible to define next the index operator *pq(k)* on bit level q such that *cq(k) = xq(pq(k))* holds and use *pq*

$$m,p = p\,q(\lambda q$$

$$m,p)$$

as a shorthand notation to address the bits of a check equation (following [6] according to a preferred embodiment of the invention the term *logic string is used for* such a group subsequently). The set of M vectors containing the positions _in_dexed by the set *Aq* after interleaving is denoted as *Xq* =

$$\left\{ \left[ \pi^{q}_{m,1}, \ldots, \pi^{q}_{m,p}, \ldots, \pi^{q}_{m,P_q} \right] \right\}$$ · As a consequence of (6) then the following relation holds (note, that antipodal mapping was applied to the coded bits)[1]:

$$\prod_{i=1}^{P_q} x_q(\pi^{q}_{m,i}) = 1 ; \qquad \{\pi^{q}_{m,1}, \ldots, \pi^{q}_{m,P_q}\} \in \mathcal{X}_q. \qquad (8)$$

Correspondingly, Eq. (7) is transformed to:

$$E\left\{ \prod_{i=1}^{P_q} x_q(k_i) \right\} = 0 ; \qquad \{k_1, \ldots, k_{P_q}\} \notin \mathcal{X}_q \qquad (9)$$

where the expectation is taken over arbitrary ('non-logic') strings of the codeword. Now we analyze the statistics of a multilevel coded PAM signal. Since the bits in each level are independent and taking into account (1) and Figure 2:

$$E\left\{ \prod_{i=1}^{P_q} s(\pi^{q}_{m,i}) \right\} = E\left\{ \prod_{i=1}^{P_q} z_q x_q(\pi^{q}_{m,i}) \right\} + \cdots$$

$$\sum_{\substack{j=1 \\ j \neq q}}^{Q} E\left\{ \prod_{i=1}^{P_q} z_j x_j(\pi^{q}_{m,i}) \right\} : \{\pi^{q}_{m,1}, \ldots, \pi^{q}_{m,P_q}\} \in \mathcal{X}_q. \qquad (10)$$

Since preferred embodiment of the invention uses different interleavers, and possibly different codes, the indices of the logic strings of one single q-th level do not coincide with the logic strings of the other levels, i.e. $X_i \neq X_j, X_j, i \neq j$. Therefore we have:

$$E\left\{ \prod_{i=1}^{P_q} z_j x_j(\pi^{q}_{m,i}) \right\} = 0; \quad j \neq q, \{\pi^{q}_{m,1}, \ldots, \pi^{q}_{m,P_q}\} \in \mathcal{X}_q.$$

$$(11)$$

Applying (11), (2) and (8) in (10) the transmitted symbols obey the following statistical property (evaluating one bit level 1for simplicity of notation we assume that all check equations of the code have the same check degree $Pq$, extension to irregular codes is fairly straightforward.
q):

$$E\left\{\prod_{i=1}^{P_q} s(\pi_{m,i}^q)\right\} = E\left\{\prod_{i=1}^{P_q} z_q x_q(\pi_{m,i}^q)\right\} = z_q^{P_q} = \cdots \quad (12)$$

$$= 2^{(Q-q-1)P_q} d^{P_q}; \qquad \{\pi_{m,1}^q, \ldots, \pi_{m,P_q}^q\} \in \mathcal{X}_q$$

As an example consider the expectation of (12) taking into account the logic strings of the first level of a 4-PAM signal is equal to $z_{P_1} 1 = d_{P_1}$. Similar to (9) and assuming that the interleavers are independent:

$$E\left\{\prod_{i=1}^{P_q} s(k_i)\right\} = 0; \quad \{k_1, \ldots, k_{P_q}\} \notin \mathcal{X}_Q \qquad (13)$$

An example utilizes blind channel estimation with multilevel codes (no priors).
The properties of (12) and (13) can be used for estimating the $l$-th tap of the channel. The idea is to use the $P_q$-th order moment, $\xi_q l$, of the received symbols at the indices of the logic strings of the q-th level. It will be shown in this section that the result of this moment isolates one desired tap, $h_l$, which is weighted by the coded bits that belong to logic strings of the q-th level and other remaining terms which are composed by the combination of coded bits that do not form logic strings. The moment is $\xi_q l$ is defined by[2]:

$$\xi_l^q = E\left\{r\left(\pi_{m,1}^q + l\right)\prod_{i=2}^{\tilde{P}_q} r\left(\pi_{m,i}^q + v\right)\prod_{i=\tilde{P}_q+1}^{P_q} r^*\left(\pi_{m,i}^q + v\right)\right\},$$

$$(14)$$

where $\tilde{P}_q = \dfrac{P_q+1}{2}$ and $\hat{h}_v$ and $v$ are the estimated value and the position of the strongest tap of the channel. Setting $l = v$ we can firstly estimate the main tap of the channel and afterwards the other taps as a function of the absolute value of the main tap (for $l = v$). It can be proved that after applying (3) and (12) in (14) and exchanging sums and products, the $P_q$-th order moment can be written as:

$$\xi_l^q = h_l |h_v|^{P_q-1} \underbrace{E\left\{\prod_{i=1}^{P_q} s(\pi_{m,i}^q)\right\}}_{z_q^{P_q}} + \epsilon. \qquad (15)$$

The estimator is composed of two parts: the left side of the sum in (15), which is the desired part for estimating the channel, and _ that is given by:

$$\epsilon = \sum_{\substack{(i_1,\ldots,i_{P_q})\in \mathcal{I} \\ \notin (l,v,v,v,\ldots)}} \prod_{p=1}^{\tilde{P}_q} h_{i_p} \prod_{p=\tilde{P}_q+1}^{P_q} h_{i_p}^*$$

$$\cdot E\left\{ s(\pi_{m,1}^q + l - i_1) \prod_{p=2}^{P_q} s(\pi_{m,p}^q - i_p + v) \right\} \quad (16)$$

[2]The additional possibility to permute the offset $l$ applied to only one symbol with the other symbol offsets in the case allows to further improving the estimate of the weaker taps [1].
here $I$ is the set with the indices of all possible $Pq$ tuples ($i1$, ..., $iPq$). Since the expectation in _ is taken over elements which are not logic strings, it is equal to zero. Therefore:

$$\xi_l^q = \begin{cases} z_q^{P_q} h_v |h_v|^{P_q-1}, & l = v \\ z_q^{P_q} h_l |h_v|^{P_q-1}, & l \neq v \end{cases} \quad (17)$$

Equation (17) shows that (14) is an estimator of the $l$-th tap pondered by the absolute value of the main tap, $hv$, to the power of $Pq$ - 1, which is firstly estimated.
Notice that although estimates of the channel impulse response could be obtained from all bit levels, the one obtained for q = 1 is the most reliable one, since $zq = 2zq+1$ (see (2)). As shown in [8], a small mean of the moment $\xi ql$ causes an strong rise of the MSE of the tap estimate, because a root of order $Pq$ has to be taken of a quantity with absolute value smaller than one for passive channels. Therefore, according to a preferred embodiment of the invention (14) only with the level q = 1 is suitable for channel estimation. This allows to select a particular suitable code for this task at that level, while the other bit level(s) can be encoded with a stronger code. It is important to notice that in practice it is not possible to evaluate the true expectation of (14) since the frame size finite and a time average is used. This leads to a _ different of zero in (15) (this is investigated in [8]). Furthermore, the value of the expectation over the logic strings in (12) slightly fluctuates around $ZPq q$ due the limited number of observations. The main goal here is to minimize _ and compute the value of (12) for a particular observation with the help of the decoder output. An algorithm with this aim is derived in the next subsection.
An example includes a blind channel estimation using priors.
From this point on it is possible to drop the index q used in the equations, because it is equal to 1 and relying on the statistics of the most reliable first bit level (related to the largest distance). When apriori knowledge from the decoder becomes available the blind channel estimator can be modified by replacing receive symbols in the moments $\xi 1 l$ with soft symbol estimates to reduce data dependent noise _. This residual error for the estimated tap is due to the fact that the time average is used in (14) instead of the true expectation. The idea is to use the a-posteriori output of the decoder, LD(**c**), and the channel taps ˆ**h** estimated in the previous iteration of the turbo equalizer for canceling this residue. However, using estimates of the channel from the previous iteration to cancel the residue _ could lead to error propagation, since the estimation of $hl$ would use previous estimates of the tap itself. Aware of this fact we change the moment of order $P1 = P$ computed for estimating the $l$-th tap of the channel in such a way that the residual error created for the time average does *not* include tap $l$ itself (see (16)). The modified version of the P-th-order moment used in the channel estimator after the initial estimation is calculated as[3]:
[3]To indicate that according to a preferred embodiment of the invention a modified moment when feedback from the decoder is available to estimate the channel we use the letter $\zeta$.

$$\zeta_l = \frac{1}{M} \sum_{m=1}^{M} \left( r\left(\pi_{m,1} + l\right) \prod_{k=2}^{P} \widehat{s}\left(\pi_{m,k}\right) \right) . \qquad (18)$$

M is the number of evaluated logic strings and ^s is the vector of estimated soft symbols computed from the decoder L-values obtained with the BCJR algorithm:

$$\widehat{s} = E\left\{s(n)\right\} = \sum_{s_i \in \mathcal{S}} s_i P_a(s(n) = s_i) . \qquad (19)$$

S denotes the set of symbols si of the modulation alphabet. It is easily shown that Eq. (18) is again composed of one constructive part used for estimating the desired tap, and a residual error formed by code symbols which are not logic strings[4]:

$$\zeta_l = h_l \frac{1}{M} \sum_{m=1}^{M} \left( s(\pi_{m,1}) \prod_{k=2}^{P} \widehat{s}(\pi_{m,k}) \right) + u, \qquad (20)$$

where u is the residual error due to the approximate expectation (average) over non-logic strings components:

$$u = \sum_{\substack{i=0 \\ i \neq l}}^{L-1} h_i \frac{1}{M} \sum_{m=1}^{M} \underbrace{\left( s(\pi_{m,1} + i) \prod_{k=2}^{P} \widehat{s}(\pi_{m,k}) \right)}_{\approx 0} . \qquad (21)$$

Notice that the sum in (21) involves all the taps of the channel apart of the desired tap $l$. Therefore, the previous estimates of these taps can be used for canceling the residual error, *u, without* error propagation throughout the turbo equalizer iterations. Hence, using the estimated taps from the previous iteration, ȟ, and the estimated symbols, ˇs, the estimated residual error is computed by:

$$\widehat{u} = \sum_{\substack{i=0 \\ i \neq l}}^{L-1} \check{h}_i \frac{1}{M} \sum_{m=1}^{M} \left( \widehat{s}(\pi_{m,1} + l) \prod_{k=2}^{P} \widehat{s}(\pi_{m,k}) \right) . \qquad (22)$$

Throughout the turbo equalizer iterations the residual of the non-true expectation is estimated and used for improving the quality of the estimated tap:

$$\widehat{h}'_l = \zeta_l - \widehat{u} \qquad (23)$$

$$= h_l \frac{1}{M} \sum_{m=1}^{M} \left( s(\pi_{m,1}) \prod_{k=2}^{P} \widehat{s}(\pi_{m,k}) \right) + \eta,$$

where $\check{h}\_l$ is a biased estimator and $\eta$ is the new residual of the channel estimator given by:

$$\eta = \sum_{\substack{i=0 \\ i \neq l}}^{L} \left(h_i - \check{h}_i\right) \times$$

$$\frac{1}{M}\sum_{m=1}^{M}\left((s(\pi_{m,1}+i) - \widehat{s}(\pi_{m,1}+i))\prod_{k=2}^{P}\widehat{s}(\pi_{m,k})\right) \tag{24}$$

4An important difference is, however, that the higher order moment is replaced by a linear relationship to $hl$, because only one receive symbol is used.

Notice that $\eta$ is smaller than $u$ due to two reasons: the first one, that is very clear, is due to the cancelling of $hi$ and $s(pm,1+i)$ by its estimated values; the other reason is that the factor $(s(pm, 1+i) - \_s(pm,1+i))$ is further decreased by the average of the factor

$$\left(\prod_{k=2}^{P}\widehat{s}(\pi_{m,i})\right)$$

that tends to zero, since it is composed by an even number of symbols. Finally, notice that we need to divide $\hat{h}/$ by the term

$$\frac{1}{M}\sum_{m=1}^{M}\left(s(\pi_{m,1})\prod_{k=2}^{P}\widehat{s}(\pi_{m,k})\right)$$

to have an unbiased estimate of $hl$ (considering $\eta$ very small). Therefore the tap $hl$ is estimated by:

$$\hat{h}_l = \frac{\ddot{h}'_l}{\frac{1}{M}\sum_{m=1}^{M}\left(\prod_{k=1}^{P}\widehat{s}(\pi_{m,k})\right)}. \tag{25}$$

(Section IV)

In this section results for the turbo equalizer according to a preferred example are described. According to a preferred example, a 4-PAM signal with two levels is used. In the first level according to an example, a 1/2 rate convolutional code with generators $(1, 5)8$ is implemented. It produces short logic strings with $P = 3$. The variance of the blind channel estimator for the iteration zero (when no a-priori values is available) decreases with the size of the logic string length [8]. Hence, the value of 3 for the logic string size is optimum in terms of channel estimation.

In the second level according to an example, a parallel convolutional code with two recursive convolutional codes with generators $(7, 5)_8$ is used. The channel used for the simulation is a 5 equally weighted tap Rayleigh channel that changes its impulse response at each frame. The frame size is of 4096 PAM symbols.

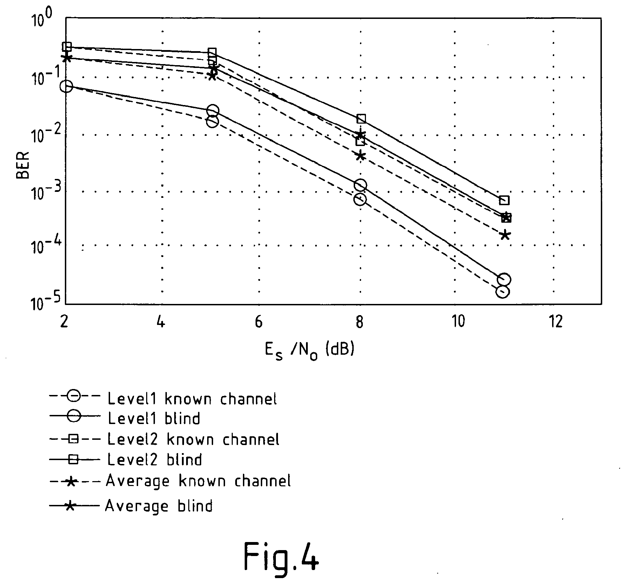

Figure 4 compares the BER of a turbo equalizer with perfect knowledge of the channel impulse response and the proposed blind turbo equalizer. All the results are shown for the last iteration of the turbo equalizer 5.

It is useful to compare the results for the first level, second level and the average of both. Notice that the blind turbo equalizer almost reach the same performance of the turbo equalizer with perfect knowledge of the channel impulse response.

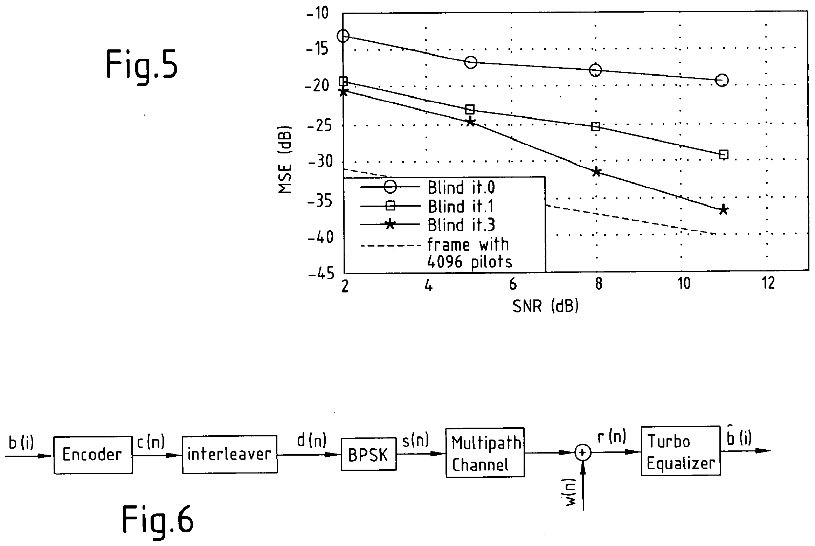

Figure 5 shows the MSE (Mean Square Error) MSE =

$$\sum_{l=1}^{L} \left( h_l - \hat{h}_l \right)^2$$

in dB of the channel estimation error in different iterations. It is useful to compare its performance with a reference system where only pilots are transmitted (4096 pilot symbols). For high SNR the blind turbo equalizer approximates to the performance of our reference system fairly well.

(Section V)

An example includes utilization of an algorithm that exploits the constraints of a multilevel coded system to blindly estimate the impulse response of a multipath channel. The performance of the proposed blind turbo equalizer approaches the performance of the turbo equalizer with perfect knowledge of the impulse
response of the channel by only a fraction of dB. Further work on optimizing the codes to each particular level may improve the performance of the blind estimator since it benefits from the quality of the soft feedback of the channel decoder.
[5]One iteration means one activation of the channel estimator, the equalizer and the decoder. Here 4 iterations are necessary for saturating the system (when no further gain can be achieved with more iterations).

Fig. 4. BER of the blind turbo equalizer.

Fig. 5. MSE in dB of the channel estimation error.

Various aspects, embodiments, and features of the invention may be applied to any multi-channel communication system in which multiple transmission channels are available for data transmission. Such multi-channel communication systems include multiple-input multiple-output (MIMO) systems, orthogonal frequency division modulation (OFDM) systems, MIMO systems that utilize OFDM, and others. The multi-channel communication systems may also implement code division multiple access (CDMA), time division multiple access (TDMA), frequency division multiple access (FDMA), or some other multiple access techniques. Multiple access techniques can be used to support concurrent communication with a number of terminals.

A MIMO system employs multiple transmit antennas and multiple receive antennas for data transmission. A MIMO channel formed by the transmit and receive antennas may be decomposed into independent channels.

Each of the independent channels is also referred to as a spatial sub channel of the MIMO channel and corresponds to a dimension. In one common MIMO system implementation, the NT transmit antennas are located at and associated with a single transmitter system, and the NR receive antennas are similarly located at and associated with a single receiver system. A MIMO system may also be effectively formed for a multiple access communication system having a base station that concurrently communicates with a number of terminals. In this case, the base station is equipped with a number of antennas and each terminal may be equipped with one or more antennas.

An OFDM system effectively partitions the operating frequency band into a number of (NF) frequency sub channels (i.e., frequency bins or sub bands). At each time slot, a modulation symbol may be transmitted on each of the NF frequency sub channels. Each time slot corresponds to a particular time interval that may be dependent on the bandwidth of the frequency sub channel.

A multi-channel communication system may be operated to transmit data via a number of transmission channels. For a MIMO system not utilizing OFDM, there is typically only one frequency sub channel and each spatial sub channel may be referred to as a transmission channel. For a MIMO system utilizing OFDM, each spatial sub channel of each frequency sub channel may be referred to as a transmission channel. And for an OFDM system not utilizing MIMO, there is only one spatial sub channel for each frequency sub channel and each frequency sub channel may be referred to as a transmission channel.

The transmission channels in a multi-channel communication system typically experience different link conditions (e.g., due to different fading and multipath effects) and may achieve different signal-to-noise-plus-interference ratios (SNRs). Consequently, the capacity of the transmission channels may be different from channel to channel.

If the set of SNRs for the transmission channels is available at the receiver system, this information may be used to distribute the total available transmit power amongst the selected transmission channels and to select the proper coding and modulation scheme. In an embodiment, the available transmission channels in each group are ranked in order of decreasing received SNR, and the total available transmit power is allocated to and used for the Nu best transmission channels in the group. In an embodiment, transmission channels having received SNRs that fall below a particular SNR threshold are not selected for use. The SNR threshold may be selected to optimize throughput, or some other criteria. The total available transmit power for each group is allocated to the selected transmission channels in the group in a defined manner (e.g., uniformly) such that high performance may be achieved. Similar processing may be performed if the channel gains (instead of the SNRs) are available at the transmitter system. In an embodiment, a common coding scheme (e.g., a particular Turbo code of a particular code rate) and a common modulation scheme (e.g., a particular PSK or QAM constellation) are used for all selected transmission channels in each group.

If a simple coding and modulation scheme can be used at the transmitter system for each group of transmission channels, then a single (e.g., convolutional or Turbo) coder and code rate may be used to encode data for all selected transmission channels in the group, and the resultant coded bits may be mapped to modulation symbols using a single (e-g., PSK or QAM) modulation scheme.

The selective channel transmission may be applied individually and independently to groups of transmission channels.

Various additional flexibilities may be afforded by processing data separately for each group of transmission channels. For example, the selective channel transmission may be independently applied to each group of channels. Also, for those groups for which selective channel transmission is applied, one threshold may be used for all groups, each group may be assigned a separate threshold, or some groups may share the same threshold while other groups may be assigned separate thresholds. Also, the same or different transmit power allocation schemes may be used for those groups for which selective channel transmission is applied. A different coding and modulation scheme may also be used for each group, which may be selected based on the transmission capacities (e.g., the achieved SNRs) of the selected transmission channels in the group.

[10481 For a MIMO system that utilizes OFDM, the MIMO construct creates multiple (Ns) transmission channels in the spatial domain and the OFDM construct I create multiple (NF) transmission channels in the frequency domain. The total number of transmission channels available to send data is then N = Ns-NF. The transmission channels may then be segregated into a number of groups in various ways.

In one embodiment, the transmission channels are segregated on a per transmit antenna basis. If the number of spatial sub channels is equal to the number of transmit antennas (i.e., NT = Ns), then the selective channel transmission may be applied independently to each of the NT transmit antennas. In an embodiment, the NT groups corresponding to the NT transmit antennas may be associated with Nr respective thresholds, one threshold for each group or transmit antenna.

The selective channel transmission then determines the subset of transmission channels (or frequency sub channels) associated with each transmit antenna having adequate transmission capacities (e.g., received SNRs). This can be achieved, for example, by comparing the received SNR for each frequency sub channel to the threshold for the transmit antenna. The total transmit power available for each transmit antenna is then allocated in a defined manner (e.g., uniformly) to the selected frequency sub channels for the transmit antenna.

In another embodiment, the available transmission channels are segregated on a per frequency sub channel basis. In this embodiment, the selective channel transmission may be applied independently to each of the NF frequency sub channels. The spatial sub channels in each group may then be selected for use for data

The segregation of the available transmission channels into groups permits optimization to be achieved on a per group basis (e.g., per transmit antenna or per frequency sub channel).

A specific coding and modulation scheme may also be used for all selected transmission channels in each group, which can simplify the processing at both the transmitter and receiver systems. In an example application, one or more transmit antennas may be assigned to each terminal scheduled for data transmission. The transmission channels associated with the assigned transmit antennas for each terminal may be placed in a group, the selective channel transmission may be performed on each group of transmission channels, and a single coding and modulation scheme may be used for the data transmission to each terminal.

Data for each frequency sub channel may be coded and modulated independently based on a coding and modulation scheme selected for that frequency sub channel. In a preferred embodiment of the invention selective channel transmission is applied to all available transmission channels.

## Blind Turbo Channel Estimation Exploiting Parity Check Equations

This implementation presents an iterative blind channel estimation algorithm that exploits the parity check equations of a channel code. While with conventional pilots prior data knowledge is used to estimate the channel, the idea here is to exploit prior knowledge of the parity check equations of the code. Furthermore, if an asymmetric code is used, the inherent phase ambiguity of blind systems is avoided. Hence, the channel can be blindly estimated to increase the spectral efficiency. An algorithm for iterating in a turbo fashion between channel estimator, equalizer and decoder is derived in such a way that the estimates of the channel are considerably refined throughout the iterations. The results of the proposed Blind Turbo Equalizer demonstrate that the Mean Square Error (MSE) of the estimated channel reaches the Cramer-Rao Lower Bound (CRLB) in a high SNR regime. In terms of BER, the blind Turbo equalizer reaches the performance of a Turbo Equalizer with perfect knowledge of the channel impulse response.

Blind estimators according to the state of the art are efficient in terms of spectral efficiency, but their performance can be degraded due to a possible phase ambiguity.

According to an example such a phase ambiguity can be eliminated using an asymmetric transmitter. One way of enforcing this asymmetry is to use an asymmetric channel encoder. Hence, there is no need of the addition of pilot symbols for estimating the channel.

According to an example the same statistics of codes exploited in [5] is used but in a turbo fashion.

It is furthermore advantageous to implement a receiver which iterates between channel estimator, equalizer and channel decoder.

According to an example, the method is carried out in a way that before the iterations of the turbo equalizer start a modified version of the channel estimator proposed in [5] is used.

This implementation includes the advantage that a derivation of a channel estimator for the subsequent iterations in a turbo way. We propose to use the observations between received symbols and soft symbols estimated from the a-posteriori information of the decoder. In addition we also use the soft symbols for cancelling the residual error due to the finite frame length. The results of the proposed Blind Turbo Equalizer are very attractive: at high SNR the MSE of the estimated channel reaches the CRLB. In terms of BER, the blind Turbo equalizer reaches the same performance of a Turbo Equalizer with perfect knowledge of the channel impulse response. Hence the proposed Blind Turbo Equalizer becomes an interesting choice due to the increased spectral efficiency when compared to the pilot solution.

Capital and lowercase bold letters represent matrices and vectors respectively. a(k) represents the k-th value of a. mod (a, 2) means the element-wise modulo two operation of the vector a. * is the convolution operator. |a| means the absolute value of a and _ a the angle of the complex number a. I and K are the number of information and coded bits respectively. L is the length of the channel. Loglikelihood ratios at equalizer and decoder are denoted by superscripts *LE and LD* respectively. Subscripts indicate a-priori or extrinsic information, e.g. *LE ext.*

The transmission model with a transmitter and receiver chain is shown in Figure 6. The bits $\mathbf{b}$ = [$b$(1), ......, $b(i)$, ......, $b(I)$]$^T$ are encoded by an asymmetric encoder. The coded bits, $\mathbf{c}$ = [$c$(1), ......, $c(n)$, ......, $c(N)$]$^T$, are permuted by a S-random interleaver. The coded interleaved bits $d(n)$ are mapped by a BPSK modulator, where 0 $\Rightarrow$ 1 and 1 $\Rightarrow$ -1. The transmitted signal $s(n)$ is transmitted through a multipath channel with impulse response $\mathbf{h}$ = [$h$(1), ......, $h(l)$, ......, $h(L)$]$^T$, and AWGN noise $w(n)$ with variance $s^2 = N_0/2$ is added to the signal giving:

$$r(n) = \sum_{i=0}^{L-1} h(i)s(n-i) + w(n). \qquad (1)$$

From this point on we are going to use the shorthand notation $h_l = h(l)$ for the tap values of the channel. Finally, the received signal $r(k)$ is detected by the Blind Turbo Equalizer.

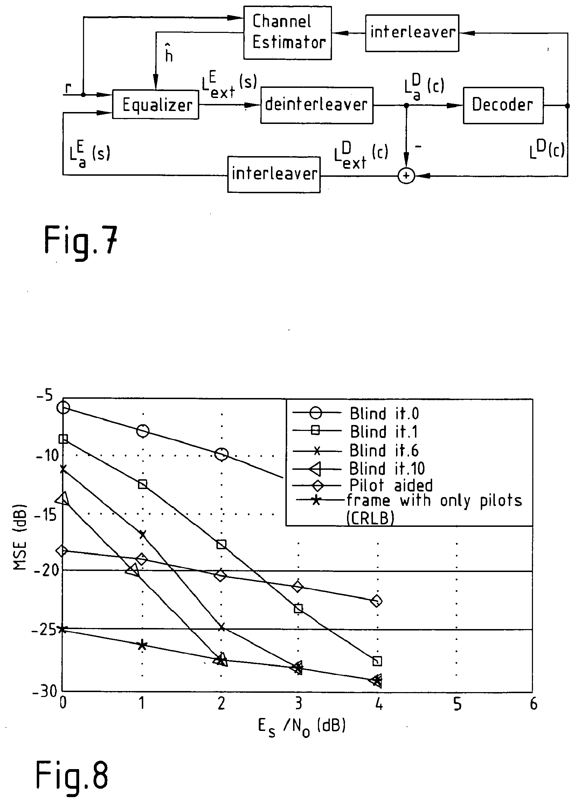

Fig. 7 shows a preferred embodiment of a soft information exchange between blind channel estimator, frequency domain equalizer and MAP decoder. Figure 7 depicts the receiver in more detail. First, the received signal, r is used for estimating the channel and for equalization. The equalizer computes the extrinsic information, $L^E_{ext}(\mathbf{s})$, of the transmitted vector s.

According to an example, a frequency domain equalizer for a single carrier with cyclic prefix as proposed in [7] is used. The extrinsic information $L^E_{ext}(\mathbf{s})$ at its output is deinterleaved to deliver the a-priori L-values $L^D_a$ for the decoder (see Figure 7). The decoder computes the a-posteriori information, $L^D(c)$, and the extrinsic information, $L^E_{ext}(\mathbf{c})$, of the coded bits. The interleaved extrinsic information of the coded bits is used as a-priori information of the equalizer and the a-posteriori value is used by the channel estimator. Notice that the total a-posteriori information of the decoder can be used for the channel estimator since the values of $\mathbf{s}$ are uncorrelated with the values of $\mathbf{h}$. Throughout the iterations the quality of the output of the equalizer, the decoder and the channel estimator are refined until the system shows no improvement anymore or the maximum number of iterations is reached.

**Blind channel estimation using code properties**

In this section the algorithm for blindly estimating the channel is explained. It is especially useful to utilize the algorithm used in the zero-th iteration of the Turbo Equalizer, which is basically the same algorithm introduced in [5] with two improvements. In section 3.2 we present the algorithm used for the subsequent iterations. Before starting to present the algorithm itself some comments about the identifiably problem and the use of asymmetric codes are done. When the channel is blindly estimated, it is necessary to have a one-to-one mapping between the received signal and the impulse response of the channel. If the channel encoder is symmetric (i.e. an encoder which can produce a valid codeword that is the negation of another codeword in the codeword space) an ambiguity in the channel estimation exists as shown below:

$$r = h * s = (-h) * (-s). \quad (2)$$

The solution for this ambiguity is to use an asymmetric transmission, which can be achieved by using asymmetric modulation [8] [9] or asymmetric codes [5]. The use of asymmetric constellations decreases the BER of the system compared to the symmetric one. Nevertheless, the use of asymmetric codes (i.e. codes where the negation of each valid codeword is not a valid codeword in the codeword space) solves the ambiguity problem without decreasing the performance of the system. The condition that a code must fulfil to be asymmetric is that the rows of the parity check matrix of the code have an odd numbers of ones. Therefore, a wide range of used channel encoders are asymmetric. One example of an asymmetric code is shown in [5]) for a (7, 5) convolutional code.

**Channel estimation without priors**

According to the invention the constraints of a channel code for estimating the channel are used. A linear code is characterized by its generator matrix, **G,** and parity check matrix, **H** of size M × *N:*

$$c = Gb, \quad (3)$$

$$Hc = 0, \quad (4)$$

where the operations are performed over GF(2). Therefore we can use the constraints imposed by the code, i.e the parity check matrix, to estimate the channel. Let the set $A = \{[\lambda m,1, ..., Am,p, ..., \lambda m,P]\}^1$ be the set of *M* vectors with the p-th column indices of the nonzero elements of the m-th row of the parity check matrix in such a way that:

$$\sum_{\substack{k_i=1, \\ \{k_1,...,k_P\} \in \mathcal{A}}}^{P} c(k_i) = 0 \quad (5)$$

and

$$\sum_{\substack{k_i=1, \\ \{k_1,...,k_P\} \notin \mathcal{A}}} c(k_i) = \left\{ \begin{array}{c} 0 \\ 1 \end{array} \right. \quad (6)$$

where the additions in (5) and (6) are taken over GF(2). One way illustrate this by an example of the logic strings of a convolutional (7,5) code. The parity check matrix of this code is given by :

$$\mathbf{H} = \begin{bmatrix} 1 & 1 & 0 & 1 & 1 & 1 & 0 & 0 & 0 & 0 & \ldots \\ 0 & 0 & 1 & 1 & 0 & 1 & 1 & 1 & 0 & 0 & \ldots \\ 0 & 0 & 0 & 0 & 1 & 1 & 0 & 1 & 1 & 1 & \ldots \\ \vdots & \vdots & \vdots & \vdots & \vdots & \vdots & \vdots & \vdots & \vdots & \vdots & \ddots \end{bmatrix} \quad (7)$$

Therefore, the set A of this code is defined by the rule

:

$$\lambda_{m,p} = \left\{ \begin{array}{ll} 2m + p - 2 & p = 1, 2 \\ 2m + p - 1 & p = 3, 4, 5 \end{array} \right. \tag{8}$$

Defining the operator p(k) such that $c(k) = d(p(k))$ holds and using the shorthand notation $p_{m,p} = p_{(\lambda m,p)}$, let the set of M vectors containing the logic strings indices after interleaving be denoted as $X= \{[p_{m,1}, ... , p_{m,p}, ... , p_m, P]\}$; after mapping to BPSK symbols the following relation holds (as a consequence of (5)):

$$\prod_{\substack{k_i=1, \\ \{k_1,...,k_P\}\in X}}^{P} s(k_i) = 1 \tag{9}$$

Each of the *M* strings of *P* values inside the product of (9) is called a *logic string* [5]. Furthermore, (6) is transformed to:

$$E\left\{\prod_{\substack{k_i=1, \\ \{k_1,...,k_P\}\notin X}}^{P} s(k_i)\right\} = 0, \tag{10}$$

where the expectation is taken over the different logic strings, 1, ...,M of the codeword. The properties of (9) and (10) can be used for estimating the l-th tap of the channel. The idea is to use the *M*th-order moment, $\xi_l$, of the logic strings which isolates one desired tap, $h_l$, that is weighted by the coded bits that belong to logic strings and other remaining terms which are composed

[1]According to a preferred embodiment of the invention one considers only codes that have the *same* number of non-zero elements P in each row of the parity check matrix such as convolutional and regular LDPC codes. Notice also that differently of our companion invention [10] according to a preferred embodiment of the invention the letter *P* denotes the logic string size since we are using the letter *M* to denote the number of rows in the parity check matrix.

by the combination of coded bits that do not form logical strings:

$$\xi_l^q = E\left\{ r\left(\pi_{m,q}+l\right)\prod_{\substack{i=1 \\ i\neq q}}^{\check{P}+1} r\left(\pi_{m,i}+v\right)\prod_{\substack{i=\check{P}+1 \\ i\neq q}}^{P} r^*(\pi_{m,i}+v)\right\}, \tag{11}$$

where $\check{P} = (P+1)/2$ ; $q = \{1, ..., p, ..., P\}$; and $\hat{h}_v$ and $v$ are the estimated value and the position of the strongest tap of the channel. Setting $l = v$ we can firstly estimate the main tap of the channel and afterwards the other taps as a function of the absolute value of the main tap (for $l \neq v$). It can be proved that after applying (1) in (11) and after some exchanging between sums and products, the *P*-th order moment can be written as:

$$\xi_l^q = h_l \, |h_v|^{P-1} \, E\left\{ \underbrace{\prod_{i=1}^{P} s(\pi_{m,i})}_{1} \right\} + \epsilon. \qquad (12)$$

The estimator is composed of two parts: the left side of (12), which is the desired part for estimating the channel, and _ that is given by:

$$\epsilon = \sum_{\substack{(i_1,\ldots,i_P)\in\mathcal{I} \\ \notin(l,v,v,v,\ldots)}} \prod_{p=1}^{\tilde{P}+1} h_{i_p} \prod_{p=\tilde{P}+1}^{P} h_{i_p}^{*}$$

$$\cdot E\left\{ s(\pi_{m,q} + l - i_q) \prod_{\substack{p=1 \\ p\neq q}}^{P} s(\pi_{m,p} - i_p + v) \right\},$$

where *I* is the set with the indices of all possible *P* tuples ($i_1$, ..., $i_P$). Since the expectation in $\varepsilon$ is taken over elements which are not logic strings, it is equal to zero. Therefore:

$$\xi_l^q = h_l \, |h_v|^{P-1}. \qquad (13)$$

Furthermore:

$$\widehat{h}_l^q = \frac{\xi_l^q}{|h_v|^{P-1}}. \qquad (14)$$

Equation (13) shows that (11) is an estimator of the *l*-th tap pondered by the absolute value of the main tap to the power of $P-1$, which is firstly estimated. Furthermore, the arithmetic mean of *P* estimates,

$$\left\{ \xi_l^1, \ldots, \xi_l^q, \ldots, \xi_l^P \right\}$$

derived from all symbols of the logic strings is computed:

$$\widehat{h}_l = \frac{1}{P} \sum_{q=1}^{P} \xi_l^q. \qquad (15)$$

The possibility of using the combination of several estimators (different values of q) decreases the variance of the estimator and is the first modification of this algorithm compared to [6], where the author only used one estimate with $q = 1$. The second modification concerns Eq. (11), where it is assumed that one has knowledge of the position of the strongest path of the channel2. The algorithm used in the channel estimator at iteration 0 of the Turbo Equalizer is summarized below:

---

**Channel estimator without priors**

*Initialization*:

Determine *position* $v$ of the strongest tap

*Steps*:

1. Estimate the *value* of the main tap:

   Compute $\xi_l^q$ according to (11) with $l = v$

   Compute $\hat{h}_v^q = \sqrt[P]{|\xi_v^q|} \angle \xi_v^q$

2. *for* $l = 1, \ldots, v - 1, v + 1, \ldots, L$

   compute $\hat{h}_l$ according to (14) and (15)

   *end*.

---

Finally, it is important to note that in practice it is not possible to evaluate the true expectation of (11) since the frame size is not infinite. Therefore the time average is used in practice instead of the true expectation, which leads to an $\varepsilon$ different from zero in (12), which is investigated in detail n our companion invention [10]. The main goal here is to minimize this $\varepsilon$ with the help of the decoder output. The next subsection shows an algorithm for this purpose which also avoids error propagation throughout the iteration of the Turbo Equalizer.

### 3.2 Blind channel estimation using priors

In an example, the blind channel estimator is modified for receiving feedback from the decoder. As apparent in (12) there is a residual error for the estimated tap due to the fact of using the time average in (11) instead of the true expectation. The idea is to use the a-posteriori output of the decoder, $L^D(\mathbf{c})$, and the channel taps estimated in previous iteration of the Turbo Equalizer, $\smile h$, for cancelling this residue. Nevertheless, using the estimates of the channel from previous iterations for cancelling the residue $\varepsilon$ in (12) could lead to error propagation, since the estimation of the tap $h_l$ would use previous estimates of the tap itself. Therefore, errors having occurred in previous iteration could propagate to the subsequent ones. Aware of this fact we change the *P*-th order moment computed for estimating the *l*th tap of the channel in such a way that the residual error created for the time average does not include the *l- th* tap itself. The modified version of the P-th-order moment used in the channel estimator is given by[3]:

$$\zeta_l^q = \frac{1}{M} \sum_{m=1}^{M} \left( r\left(\pi_{m,q} + l\right) \prod_{\substack{i=1 \\ i \neq q}}^{P} \hat{s}\left(\pi_{m,i}\right) \right), \qquad (16)$$

[2]We assume that the delay of the strongest path of the channel is either properly estimated by some existing algorithm for this purpose or by first varying $l = v$ between zero and some maximum value. [3]To indicate that according to a preferred embodiment of the invention a modified moment when feedback from the decoder is available to estimate the channel we use the letter $\zeta$.

where $M$ is the number of logic strings and $\hat{s}$ is the vector of the estimated symbols computed from the decoder:

$$\widehat{s} = \tanh\left(\frac{L^D(\mathbf{c})}{2}\right). \qquad (17)$$

It is easily shown that (16) is composed of one constructive part used for estimating the desired tap, and a residual error formed by code symbols which are not logic strings:

$$\zeta_l^q = h_l \frac{1}{M} \sum_{m=1}^{M} \left( s(\pi_{m,q}) \prod_{\substack{i=1 \\ i \neq q}}^{P} \widehat{s}(\pi_{m,i}) \right) + u, \qquad (18)$$

where u is the residual error due to the approximate expectation over non-logic strings components:

$$u = \sum_{\substack{i=0 \\ i \neq l}}^{L} h_i \frac{1}{M} \sum_{m=1}^{M} \underbrace{\left( s(\pi_{m,q} + l) \prod_{\substack{i=1 \\ i \neq q}}^{P} \widehat{s}(\pi_{m,i}) \right)}_{\approx 0}. \qquad (19)$$

Notice that the sum in (19) involves all the taps of the channel apart of the desired *l*th tap. Therefore, the previous estimates of these taps can be used for cancelling the residual error, *u, without* error propagation throughout the turbo equalizer iterations. Hence, using the estimated taps from the previous turbo equalizer iteration, ˇh, and the estimated symbols, s, the estimated residual error is computed by:

$$\widehat{u} = \sum_{\substack{i=0 \\ i \neq l}}^{L} \check{h}_i \frac{1}{M} \sum_{m=1}^{M} \left( \widehat{s}(\pi_{m,q} + l) \prod_{\substack{i=1 \\ i \neq q}}^{P} \widehat{s}(\pi_{m,i}) \right). \qquad (20)$$

Throughout the Turbo Equalizer iterations the residual of the non-true expectation is estimated and used for improving the quality of the estimated tap:

$$\hat{h}_l^q = \zeta_l^q - \hat{u} \qquad (21)$$

$$= h_l \frac{1}{M} \sum_{m=1}^{M} \left( s(\pi_{m,q}) \prod_{\substack{i=1 \\ i \neq q}}^{P} \widehat{s}(\pi_{m,i}) \right) + \eta,$$

where $\eta$ is the new residual of the channel estimator given by:

$$\eta = \sum_{\substack{i=0 \\ i \neq l}}^{L} (h_i - \check{h}_i) \times \qquad (22)$$

$$\frac{1}{M} \sum_{i=1}^{M} \left( (s(\pi_{m,q} + i) - \widehat{s}(\pi_{m,q} + i)) \prod_{\substack{i=1 \\ i \neq q}}^{P} \widehat{s}(\pi_{m,i}) \right)$$

Notice that $\eta$ is smaller than $u$ due to two reasons: the first one, that is very clear, is due to the cancelling of $h_i$ and $s(p^{m,q} + l)$ by its estimated values; the other reason is that the factor $(s(p_{m,q} + l) - - s(p_{m,q} + l))$ is further decreased by the average of the factor

$$\left( \prod_{i=1, i \neq q}^{P} \widehat{s}(\pi_{m,i}) \right)$$

that tends to zero, since it is composed by an even number of bits.

Furthermore (21) can be expressed by:

$$\hat{h}_l^q = h_l \cdot \frac{1}{M} \sum_{m=1}^{M} \left( s(\pi_{m,q}) \prod_{\substack{i=1 \\ i \neq q}}^{P} \widehat{s}(\pi_{m,i}) \right) + \eta. \qquad (23)$$

Notice that the estimator of (23) is biased since the mean value of $\hat{s}$ is smaller than one for non-reliable values of the a-posteriori LLR of the decoder (see (17)). Hence, considering $\xi$ as very small and taking into account the $M$ different estimators, the *unbiased* estimate of $h_l$ is given by:

$$\hat{h}_l = \frac{\frac{1}{P} \sum_{q=1}^{P} \hat{h}_l^q}{\left( \frac{1}{N} \sum_{n=1}^{N} |\hat{s}(n)| \right)^{P-1}}. \qquad (24)$$

In section 4 it is shown that (24) provides a considerable gain of the estimates of the channel throughout the iterations of the turbo equalizer in such a way that it reaches the CRLB for a sufficiently high SNR.

**Results**

In this section we show some results. The encoded bits are mapped by a BPSK modulator and a cyclic prefix of the size of channel length is appended to the frame. At iteration zero (without feedback of the decoder) the algorithm presented in section 3.1 is used for estimating the channel. For further iterations the estimator derived in section 3.2 is used. The equalizer used is the one of [7] and according to a preferred embodiment of the invention a LOGMAP decoder [11] is used for a 1/2 rate (7,5) convolutional code. Every iteration of the Turbo Equalizer (channel estimation, equalization and decoding) is performed over one frame.4

Two channels taken from [12] are used:

- A: [0.408; 0.816; 0.408]
- B: [0.07;0.03;0.21;0;0.36;0.72;-0.5;-0.21;0.07;-0.05;0.04]

Furthermore, we compare two scenarios:

| Scenario | Channel | Frame Length |
|---|---|---|
| I | Channel A | 1024 |
| II | Channel B | 4096 |

As a reference we compared our blind transmission approach with a pilot aided system. In the pilot aided case and Scenario I, 200 pilots and 824 encoded bits are used for composing the frame. For the Scenario II, 800 pilot bits and 3296 encoded bits are transmitted. For both cases, blind and pilot aided case, the necessary number of iterations for saturating the receiver was performed until no further gain is observed[5].

[4]Notice that the channel estimator could use several frames for increasing the samples in the time average. Nevertheless the computational complexity would also increase.
[5]For the pilot aided case, the channel is estimated only once and those several iterations between equalizer and decoder are performed

| System | Overall code rate (encoder + pilots) |
|---|---|
| Blind Pilot aided | 1/2 (only encoder) <br> ~ 0.402 (1/2 encoder + 0.8 pilots) |

First we show the results of Scenario I. Figure 3 shows

$$\text{MSE} = E\left\{ \sum_{l=1}^{L} \left( h_l - \hat{h}_l \right)^2 \right\}$$

the Mean Square Error of the estimated channel for the blind and the pilot aided cases. For the pilot case according to a preferred embodiment of the invention a Least Squares (LS) estimator over the pilots is used.

According to an example, the performance of a system in which every symbol of the frame is a pilot and no information at all is transmitted. This is a lower bound and actually it converges to the CRLB as shown in [3].

From Figure 3 it can be noticed that the proposed blind turbo equalizer is roughly 7 dB better than the pilot aided turbo equalizer for a high SNR and almost reaches our lower bound.

Figure 4 compares the corresponding BER of the proposed blind algorithm and the pilot aided case with the turbo equalizer having perfect knowledge of the impulse response of the channel. For the case of having perfect knowledge of the impulse response of the channel, the necessary number of iterations between equalizer and decoder to reach the saturation is performed. The proposed blind turbo equalizer outperforms the pilot aided one and reaches the same performance of the Turbo Equalizer with perfect knowledge of the channel. The explanation for this good performance is that the blind channel estimator uses more information (the whole frame) than the pilot aided one for estimating the channel that uses only pilots. Actually according to the CRLB presented in [3], for high SNR values the quality of the channel estimation becomes proportional to the power of all symbols of the frame, independent whether they are pilots or information. Since the asymmetric code can solve the phase ambiguity the use of blind channel estimation becomes very attractive due to its spectral efficiency. Now, we compare the results of Scenario II. Channel B is mild in terms of ISI but is more difficult to estimate due to its longer impulse response. Therefore, we utilize a longer frame length (4096 bits) than in Scenario I, since it is necessary to have more observations for estimating more taps. Figure 5 depicts the MSE of the blind and pilot aided system compared to the CRLB.

The proposed blind channel estimator using priors has a noticeable gain already in the first iteration. Again, for high values of SNR the blind estimator using priors can reach the CRLB since it uses observations of the whole frame. Note that once more the conventional pilot aided estimator is inferior in terms of performance and spectral efficiency. The performance in terms of $E_b/N_0$ versus BER is shown in Figure 6. This result confirms that the proposed blind channel estimator reaches the performance of the turbo equalizer with perfect knowledge of the channel impulse response. Furthermore, the blind estimator has a gain of roughly 1.3 dB compared to the pilot aided case, which reflects roughly the number of symbols

Fig. 8. Comparison of the MMSE of the estimated channel for Scenario 1 between the proposed blind turbo equalizer, the pilot-aided and the turbo equalizer with perfect knowledge.

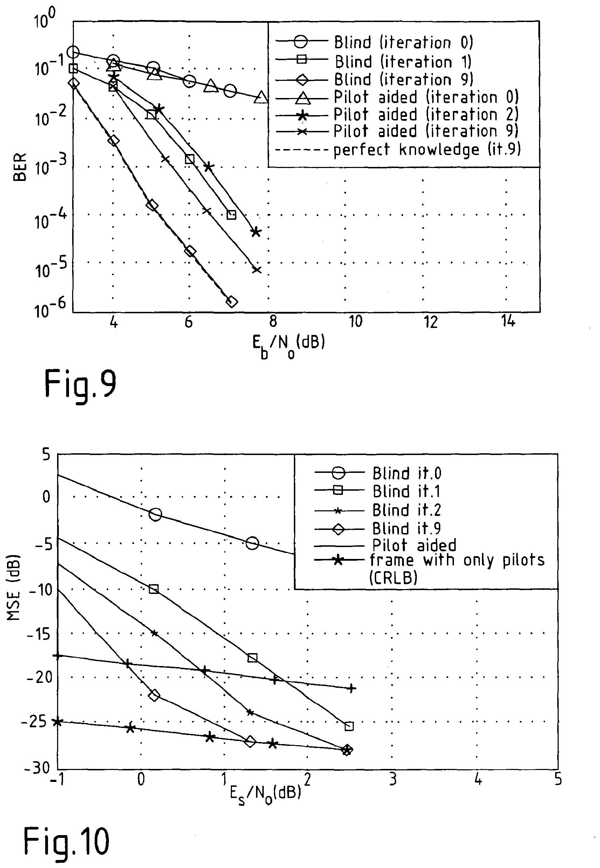

Fig. 9. Comparison of the BER for Scenario 1 between the proposed blind turbo equalizer, the pilot-aided and the turbo equalizer with perfect knowledge.

Fig. 10. Comparison of the MMSE of the estimated channel for Scenario 2 between the proposed blind turbo equalizer, the pilot-aided and the turbo equalizer with perfect knowledge.

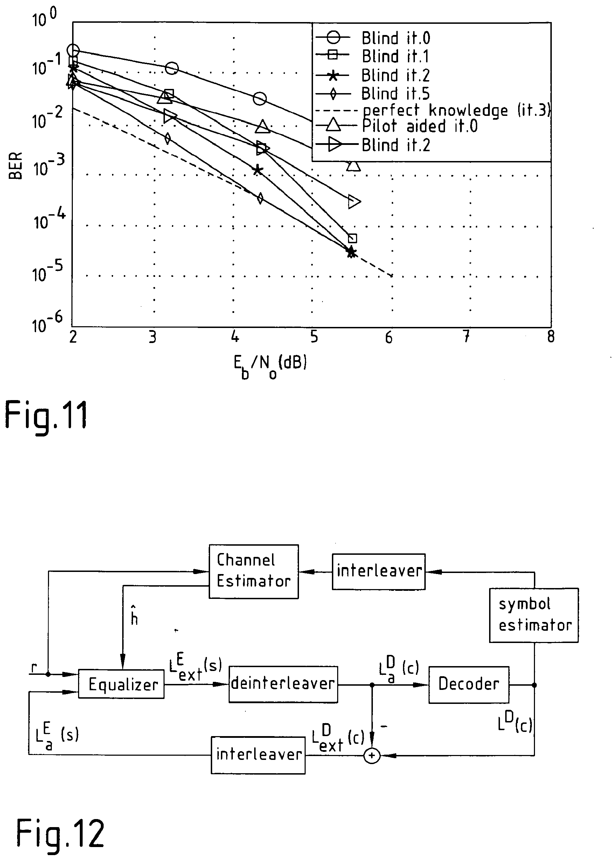

Fig. 11. Comparison of the BER for Scenario 2 between the proposed blind turbo equalizer, the pilot-aided and the turbo equalizer with perfect knowledge.

used for estimating the channel.

A blind channel estimator using the code properties and the LLRs from the decoder is proposed. It is shown that the proposed scheme can significantly increase the performance of the channel estimates and reach the CRLB in high SNR conditions. Therefore, the proposed blind estimator shows a better spectral efficiency and performance compared to the pilot-aided case. Furthermore, since according to a preferred embodiment of the invention a convolutional encoder, which is asymmetric the phase ambiguity is avoided and it is not necessary to use any pilot symbol as in the semi-blind approach. Further implementations of the invention are applying the proposed scheme to higher order modulation and MIMO systems.

The selected transmission channels may be used to transmit one or more data streams, each of which may be independently coded with the common coding scheme. In another transmit processing scheme, selective channel transmission is applied independently to each transmit antenna. In this case, the selected transmission channels for each transmit antenna may be used to transmit one or more data streams, each of which may be independently coded with the coding scheme selected for that transmit antenna. If one data stream is independently coded and transmitted on each spatial sub channel, then the successive cancellation receiver processing technique may be used to recover the transmitted data streams.

In the disclosure examining equations are marked by 'logic strings'.

Iterative blind channel estimation under usage of the examining equations of a fault cognitive code and simultaneous estimate of the data

**Problem definition:**

Starting point of a preferred embodiment of the invention is the following timediscrete transfer model:

$$r(k) = \sum_{l=0}^{L-1} h(l)s(k-l) + n(k) \qquad (25)$$

*The terms* $s(k)$ and $r(k)$ describe the sent and received data at the time of $k$, $h(0)$... $h(L-1)$ the so-called channel impulse response of the length of $l$ and $n(k)$ noise (roar) superimposed at the receiver. The sending symbols s are taken from the set of values $\pm 1$ and correspond to the bits of code words $\|c\|$ (bold letters indicate vectors) according to the assignment s $(k) = 1-2 \|c\|$ (k). The channel impulse response h not known at the receiver shall be estimated ('blindly') without knowledge of the sent data.

An example relates to a method for a regulation of the channel impulse response of a transmission system by evaluation to the reception symbols by the code (exact by the examining equations) based boundary conditions.

The coefficients of the channel impulse response arise according to this approach from products of the reception symbols formed suitably so that a product results from elements for the channel impulse response. The indices $\pi_{1,\,n}$ ... $\pi_{M}$, n that overlay with medium-unbiased terms ('roaring' data conditionally) give the addresses of the m of reception symbols which could be combined with each other according to an examining equation of the code.

By the index offset I one puts the component of the channel impulse response to be determined.

The other coefficients are evaluated under use of the estimate of this strongest component following:

$$\xi_l(n) = r(\pi_{1,n} + l) \prod_{m=2}^{(M+1)/2+1} r(\pi_{m,n} + l) \prod_{m=(M+1)/2+2}^{M} r^*(\pi_{m,n} + l) = h_l |h_v|^{M-1} + \varepsilon \approx h_l |h_v|^{M-1} \qquad (26)$$

To reduce the noise (roar) $\varepsilon$ of the estimation to a permitted maximum, it is useful to evaluate roar by equations (e.g. some hundred) so that $|\varepsilon| = |h| |h_v|^{M-1}$.

Therefore it is proposed to use codes of a small $M$ i.e. it is codes with examining equations with a small number of terms, since the number of the disturbing terms and roaring numerically are then lower, too. In addition, an estimate of the high terms is used with the help of a decoder after decoding of the data which makes it possible, to reduce the required block length (number of the used examining equations and data symbols).

It is possible to reduce the required block length (number of the used examining equations and data symbols) or to improve the precision of the channel estimation. For achieving this the inter symbol interference caused by the channel is corrected at the received data stream to initial channel estimation by means of an equalizer (under use of the valued channel impulse response). The corrected data symbols are then decoded.

The estimated values available at the decoder exit for the sent bits can be used for the reconstruction of the send dates or the data-dependent high terms. By this an improved channel estimation is reached.

Fig. 12. Schematic presentation of equalizer integration.

The process can repeated several times be reached is to no further improvement.

Expansion on mehrvalente pulse amplitude modulation (PAM)

To obtain higher transmission rates it is useful to enlarge the symbol alphabet of $\{\pm\ 1\}$ to $\{-P,...+P\}$. As the result several bits are transmitted with one symbol and superposition of relating bit levels occurs. To each of these the estimation principal as used for single bits can be applied. To achieve this the levels are coded separately and processed at the receiver according to the principle of the so-called 'multi-level Coding'.

The partial results can be combined to a common estimation result. One can alternatively code the bit level which yields the most reliable estimate (the bit levels have a different middle symbol amplitude due to the relation between bits and symbols) with one code especially adapted for the channel estimation while the other levels are transferred with a code especially suitable for the error correction. It is especially useful to utilize the same iterative approach as in the case of one bit/symbol.

According to an example, it is useful to derive the mean squared error (variance) of a blind channel estimator that exploits constraints imposed on valid combinations of code bits (also called 'logic strings') and the respective receive symbols by the parity check equations of a channel code. The dependence of the estimation error on the length of the logic strings, their available number as well as on the channel impulse response is quantified for a *finite* number of observations, i.e. logic strings that are available within one data block. The result explains, why short logic strings perform significantly better than longer ones. This provides a guideline to choose appropriate codes and allows for given typical channel conditions to select the appropriate code or block length to achieve the desired accuracy of the channel estimate.

It is especially useful to utilize statistics of a Blind Channel Estimator based on "Logic Strings".

Blind estimation methods exploiting certain inherent signal properties have repeatedly been proposed as alternatives to conventional preamble based channel estimation [1], [2]. Here we study an algorithm that uses higher order moments of the receive symbols and thus belongs to the class of higher-order statistics (HOS) algorithms. Specifically it exploits so-called *'logic strings'* for blind channel estimation which was proposed in Ref. [3].

The contribution of the present work is an analysis of the statistical properties of the formula for the estimated channel taps (derived in [3] as Eq. (40)) in the case of finitely many observations. When the expectation over an infinite number of logic strings will be replaced by the arithmetic mean, data dependent noise terms result. In the BPSK modulated case these terms are binomially distributed and weighted by powers of the taps of the channel impulse response. One of our results shows that the higher order estimator can be characterized in almost closed form as the power of the channel impulse response raised to the order of the estimator and reduced by a certain term selected via a logic string. By further analysing the derived estimates of the channel taps we show that the estimator strongly degrades when the length of the logic strings is increased. Therefore, either e.g. convolutional codes with short generators or LDPC codes with small check degree are desirable. In addition weak taps are difficult to estimate accurately due to the nonlinear relation between the estimated quantity (the higher order moment which on the other hand allows the resolution of the phase ambiguity) and the channel tap which is derived from it.

The rest of this paper is organized as follows: Sections 2 and 3 review the concept of logic strings and the technique for blindly estimating a channel with them. The main part follows in section 4 that presents the analysis of the estimator and a prediction of its MSE. As usual we summarize with some conclusions.

## 2 Logic Strings

The term *'logic string'* refers to a constraint imposed on the codeword space in the sense that the code bits obey certain check equations. Such constraints can obviously be expressed in terms of the parity check matrix H (i.e.

the null space to the codeword space, such that a certain check equation 'checks' or relates a certain set of code bits). Alternatively, the generator matrix or the generator polynomials of the code can be used. To illustrate the concept we take as in Ref. [3] the simple case of a half rate convolutional code with generators $[7, 5]_8$. The encoding rule for two consecutive bits $C_{2n-1}$, $C_{2n}$ can be stated as

$$
\begin{aligned}
c_{2n-1} &= b_n \oplus b_{n+1} \oplus b_{n+2} \quad (26) \\
c_{2n} &= b_n \oplus b_{n+2} \, .
\end{aligned}
$$

Logic strings of length $M = 5$ of the code are given by

$$
\begin{aligned}
c_{2n-1} \oplus c_{2n} &\oplus c_{2n+2} \oplus c_{2n+3} \oplus c_{2n+4} = \cdots \\
&= (b_n \oplus b_{n+1} \oplus b_{n+2}) \oplus (b_n \oplus b_{n+2}) \oplus (b_{n+1} \oplus b_{n+3}) \quad (27) \\
&\cdots \oplus (b_{n+2} \oplus b_{n+3} \oplus b_{n+4}) \oplus (b_{n+2} \oplus b_{n+4}) = 0 \, .
\end{aligned}
$$

For such a half rate code $C$ let us consider codewords of size $K$. Then the number of logic strings within each codeword relating $M$ code bits amounts to $N = (K - m_c)/r_c$, where $r_c$ and $m_c$ denote the rate and the memory of the code. To address their elements a two-dimensional array $\tau$ with $M$ rows and $N$ columns is introduced. The index sets $[\tau_{1,n}, \tau_{2,n}, \cdots, \tau_{M,n}]$ to enumerate the code bits of logic string n (M-tuples of length 5) within a code word of the $[7, 5]_8$ code can be obtained with the rule:

$$
\tau_{m,n} = \left\{ \begin{array}{ll} 2n - m - 2, & m = 1, 2 \\ 2n + m - 1, & m = 3, 4, 5 \end{array} \right. \quad (28)
$$

Another convenient way to determine the index sets of the logic strings is to write down the generator matrix and then enumerate the non zero indices columnwise to get the index set of the first logic string corresponding to the first rows of a possible parity check matrix H. The other logic strings (columns of $H^T$) are shifts by two. An example again for the [7, 5] code is:

$$
\mathbf{G}_{75} = \left[ \begin{array}{ccc} 1 & 0 & 1 \\ 1 & 1 & 1 \end{array} \right] \Rightarrow \underbrace{\left[ \begin{array}{cccccc} 1 & 1 & 0 & 1 & 1 & 1 \end{array} \right]}_{\text{'logic string'}} \quad (29)
$$

To avoid that an unwanted logic string is caught by the channel estimator[1] each code word c is permuted

[1] _Consider the product of 5 receive symbols at the addresses of a logic string: it contains the respective transmit symbols weighted with the first channel tap. Because another logic string exists with all addresses decremented by two, it will be picked up as well, when the channel length is larger than 2. This makes the interleaver advantageous._

It is especially useful to utilize a vector d that is mapped to symbols before transmission. Denoting the permutation function by $\pi$ the indices addressing a logic string can be written as $[\pi(\tau_{1,n}), \pi(\tau_{2,n}), \cdots, \pi(\tau_{M,n})]$ which in shorthand notation is written as $[\pi_{1,n}, \pi_{2,n}, \cdots, \pi_{M,n}]$.

To avoid a phase ambiguity when blindly estimating a communication channel, a symmetry of the overall response is undesirable. E.g. any inversion symmetry of the modulation alphabet or the code causes a phase ambiguity of 180°. While removing symmetry in the modulation format causes an increase in error probability for fixed signal to noise ratio a code $C$ without inversion symmetry does not degrade performance. Such an _'asymmetric'_ code is characterized by the fact that for a given code word c its negation is _not_ within the code space (see [3]):

$$
(30)
$$
$$
\mathbf{c} \in \mathcal{C} \Leftrightarrow \bar{\mathbf{c}} \notin \mathcal{C}
$$

For this reason we consider in the following only asymmetric codes. The condition for a code to be asymmetric means that at least one logic string with odd length $M$ exists.

**3 Channel Estimation with Logic Strings**

With the channel impulse response **h** = [h(0), ⋯ , h(L-1)] of a channel with length *L* and BPSK modulated transmit symbols s(k) = 1 - 2d(*k*) disturbed by additive white 2 Gaussian noise *n(k)* with variance $\sigma_n^2$ the received symbols are written as

$$r(k) = \sum_{l=0}^{L-1} h(l)s(k - l) + n(k). \quad (31)$$

Note that with BPSK modulated symbols the condition imposed by Eq. (27) on 5 or generally *M* code bits means, that the product of the associated BPSK symbols becomes one. To estimate the channel impulse response the strategy is to evaluate Mth order products of receive symbols that equal a related *Mth* order product of channel taps weighted by a logic string (equal to one) and additional terms caused by multiplying the convolution sums of Eq. (31). In the limit of infinite code word size these terms will vanish while the *Mth* order product of the channel taps survives. Two variants exist to apply this strategy to obtain an estimate of the whole response.

In variant I a *common* delay $v \in \{0, \cdots L - 1\}$ is used for addressing the receive symbols corresponding to a logic string. An *unconditioned* estimate of tap *v* is obtained. As will become clear from the subsequent analysis of the variance of the estimator, it is advantageous to employ this variant only to estimate the strongest tap and then switch to variant II.

This variant uses *different* delays applied to the addresses of a logic string to obtain a *conditional* estimate of the other taps based on the previously determined estimate of the strongest tap $\hat{h}_v$. (We will use the letter *v* in the following to refer to the strongest tap, which might be determined first by variant I with different delays, while *l* denotes an arbitrary tap position[2]; in passing we note, that the scheme can also handle non minimum phase channels were the first tap is not the strongest one). These considerations lead to the equation already stated in (3) that jointly describes both estimator variants. Taking the expectation over a sufficiently large number of logic strings

[2]*The additional possibility to permute the offset l applied to only one symbol with the other symbol offsets in the case l ≠ v allows to further improve the estimate of the weaker taps [4], but will not be pursued further here.*

drives all terms in the *Mth* order moments of the receive symbols to zero that do not originate from logic strings.

$$\xi_l = \hat{h}_l |\hat{h}|_v^{M-1} = E\left\{ r(\pi_{1,n} + l) \prod_{m=2}^{P+1} r(\pi_{m,n} + v) \right.$$
$$\left. \cdots \prod_{m=P+2}^{M} r^*(\pi_{m,n} + v) \right\} . \quad (32)$$

The quantity *P* = (M + 1)/2 serves to bipartition the received symbols participating in the evaluation of a logic string after one symbol was split off to select the tap $h_l$. This trick allows an unambiguous phase estimate for complex-valued channels, because the phase of $h_l$ depends linearly on $\xi_l$ which is a higher order moment only in terms of the absolute value, the magnitude of the channel taps.

Summarizing our observations so far, we state that the estimated quantity is a product of tap $h_l$ with the absolute value of the strongest tap $|h_v|$ raised to the power of (M -1) and data dependent mean-free terms. To further investigate the properties of the estimator $\xi_l$ we proceed to derive Eq. (34), which explicitly shows also the terms not related to logic strings. Inserting the channel impulse response into Eq. (32) we end up with the following polynomial of order *M:*

$$\xi_l = E\left\{\left(\sum_{\kappa_1=0}^{L-1} h_{\kappa_1} s(\pi_{1,n} + l - \kappa_1) + n(\pi_{1,n} + l)\right)\right.$$

$$\prod_{m=2}^{P+1}\left(\sum_{\kappa_m=0}^{L-1} h_{\kappa_m} s(\pi_{m,n} + v - \kappa_m) + n(\pi_{m,n})\right)$$

$$\left.\prod_{m=P+2}^{M}\left(\sum_{\kappa_m=0}^{L-1} h^*_{\kappa_m} s^*(\pi_{m,n} + v - \kappa_m) + n^*(\pi_{m,n})\right)\right\} . \quad (33)$$

It should be recognized that (due to the length $L$ of the channel) $\xi_l$ consists of $L^M$ terms in the noiseless case or $(L+1)^M$ terms, if the noise is included, because we multiply $M$ factors of $L$ or $L + 1$ terms each[3]. It is convenient to address these terms by index $M$ tuples $(K_1 \ldots K_M)$ which reflect all possible combinations of delays (terms in one factor) in the product of all $M$ factors. Each index $K_m$ ranges from 0 to $L$ - 1 (or L, if noise is included).

Just one out of all these terms adds constructively (taking the expectation), because it is generated by symbols that belong to a logic string. All others are formed by $M^{th}$ order products of *arbitrary* symbol combinations.

According to an example, it is useful to concentrate on the real-valued case which is easier accessible for analysis. Thus the conjugation of the received symbols in the second product in Eq. (33) can be omitted and the two products can be merged. The structure of the equation can now be represented more clearly by grouping the resulting products of coefficients of the channel impulse response together with the symbol products. Neglecting the noise for clarity (the terms involving it are mean free) we get Eq. (34) at the top of the next page.

In practical situations the expectation has to be replaced by the arithmetic mean over the number of $N$ logic strings available in a given data block or code word. This creates a sum of non-vanishing terms that acts as a perturbation on the estimate of the channel taps and can be interpreted as data dependent noise. An additional perturbation is caused by the additive Gaussian noise terms.

According to an example, both contributions to the MSE of the estimator decay for finite $N$ as 1/N which might be expected from Cramer-Rao bounds of similar estimators.

[3]*It is useful here, to have an example in mind: for a channel of length 3, which will be considered in later numerical examples we are facing already $3^5 = 243$ or $4^5 = 1024$ terms, respectively.*

$$\xi_l = h_l h_v^{M-1} \underbrace{\prod_{m=1}^{M} s(\pi_{m,n})}_{=1} + \underbrace{\sum_{t=1}^{L^M-1} h_{\kappa_1+l} \prod_{m=2}^{M} h_{\kappa_m}}_{u_t=u_t(\kappa_1\ldots\kappa_M)} E\underbrace{\left\{s(\pi_{1,n} + l - \kappa_1) \prod_{\substack{m=1\\m\neq q}}^{M} s(\pi_{m,n} + v - \kappa_m)\right\}}_{v_t=v_t(\kappa_1\ldots\kappa_M)}$$

(34)

## 4 Statistical Properties of the Channel Estimate

### 4.1 Real-valued Noiseless Case

Our goal is to characterize the distribution of the channel estimates $\hat{h}_l$ around their true values $h_l$ To this end we first characterize the quantity $\xi_l$, and then consider the mapping from $\xi_l$ to $\hat{h}_l$ subsequently.

First we replace in Eq. (34) the expectation over logic strings with the finite sum over the TV available strings within one data block (codeword). Exchanging the sums over the terms *within* a logic string and the sum over all logic strings we get:

$$\xi_l \cong h_l|h_v|^{M-1} + \sum_{t=1}^{L^M-1} \underbrace{h_0^{x_0}, \cdots, h_{L-1}^{x_{L-1}}}_{u_t(\kappa_1\ldots\kappa_M)} \frac{1}{N}\sum_{n=1}^{N} \underbrace{v_t(n)}_{v_t(\kappa_1\ldots\kappa_M)} \quad (35)$$

We note from Eqs. (59),(60) that we are dealing with the sum of several random variables: The desired term $\hat{h}_l|h_v|^{M-1}$ is a deterministic quantity plus a sum of products of two factors $u_t$ and $v_t$ that depend on the index M-tuples

$(K_1 \dots K_M)$ For a static channel with fixed impulse response h we observe that $u_t (K_1 \dots K_M)$ is a deterministic product of channel taps subject to the constraint that their exponents add up to $M$. The frequency of occurrence of the same combination of channel taps in the $L^M - 1$ terms is given by a polynomial coefficient.

On the other hand $v_t(K_1 \dots K_M)$ is a random variable with binomial distribution, because for BPSK symbols the product $s(\pi_{m,n} + \upsilon - \kappa_m)$ is either plus or minus one. Thus the sum $V_t$ of the terms $v_t(K_1 \dots K_M)$ belonging to a given index $M$ tuple when evaluating the arithmetic mean within one block over the available $N$ logic strings corresponds to the sum over binomially distributed random variables $\upsilon_t(n) \in \{\pm 1\}$:

$$V_t = \sum_{n=1}^{N} v_t(n) = \left( \sum v_t(n) \equiv 1 \right) - \left( \sum v_t(n) \equiv -1 \right) . \quad (36)$$

The usual binomial distribution $p(k) = \binom{n}{k} 2^{-N}$ that describes $v_t$ or coin tossing with $k$ observed heads in $N$ trials (with mean N/2 for an unbiased coin) can easily be modified by replacing $k$ with $V_t$ = (N/2 + k) - (N/2 - k) = 2k - N to describe the statistics of $V_t$:

$$p(V_t) = \frac{N!}{(\frac{N+V_t}{2})!(\frac{N-V_t}{2})!} \frac{1}{2^N} . \quad (37)$$

Using the fact that for $N \to \infty$ the binomial distribution can be replaced by a Gaussian density with variance

$$\sigma_{V_t}^2 = N$$

(the approximation is already good for $N > 10$) we get:

$$p(V_t) = \frac{1}{\sqrt{2\pi N}} \exp \left\{ -\frac{V_t^2}{2N} \right\} . \quad (38)$$

To further analyze Eq. (34) we have to take into account that the random variables $V_t$ with (essentially) Gaussian distribution are multiplied by factors $u_t(K_1 \dots K_M) = h_0^{x_0}, \cdots, h_{L-1}^{x_{L-1}}$. such a scaling of the random variable by a factor, say $a_i$, scales the variance of the distribution by $a_i^2$. In addition a certain product of order $M$ (length of the logic string) between channel taps (of a channel with length L) occurs with a frequency $b_i$ described by a polynomial coefficient. Calling the particular exponents (see Eq. (35)) of the channel taps $x_0, \cdots x_{L-1}$ the polynomial coefficient is given by[4]

$$b_i = p(x_0, \dots, x_{L-1}) = \frac{M!}{x_0! x_1! \dots x_{L-1}!} \frac{1}{L^M} . \quad (39)$$

Using the fact that the sum of two uncorrelated Gaussian r.v. is again a Gaussian r.v. with mean equal to the sum of the means and variance equal to the sum of the variances we obtain the total variance $\sigma_\xi^2 = N \sum_i b_i a_i^2$ of the sum of the Gaussian variables perturbing the quantity $h_l|h_v|^{M-1}$ to be estimated.

We thus arrive at a pleasing simple formula for the total variance which makes sense intuitively: The total MSE consists of the $M^{th}$ power of the power of the channel impulse response from which only the single term selected with the logic string is removed and subtracted. Because the Gaussian r.v. added to the deterministic mean are mean free, the estimator $\xi_l$ of the higher order moment is unbiased. Taking into account the factor 1/N due to the arithmetic mean, the total variance of the perturbation term in the noise free case is given by

$$\sigma_{\xi_l}^2 = \frac{\left(\sum_0^{L-1} |h_l|^2\right)^M - |h_l|^2 |h_v|^{2M-2}}{N}. \quad (40)$$

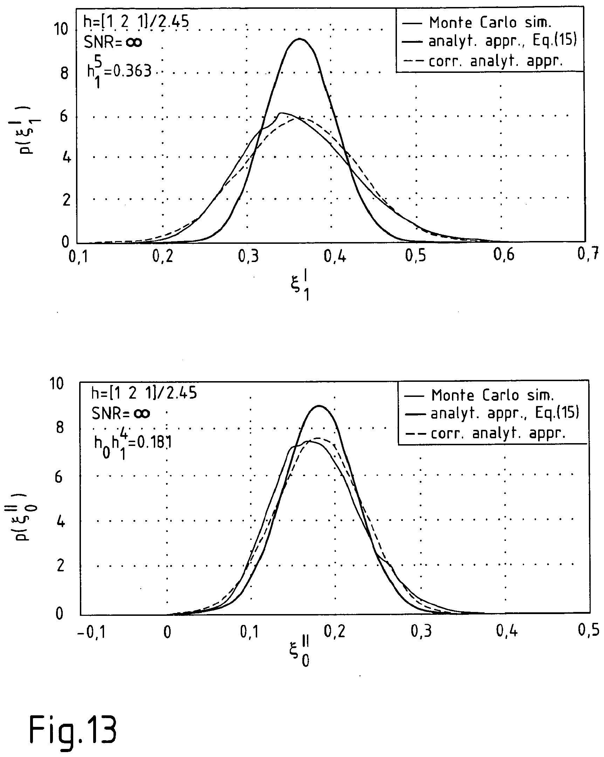

**Numerical example:** Examples of the predicted and numerically determined distributions of the tap moments $\xi_l$ for a passive three tap channel with impulse response $h = [1, 2, \bar{1}]/\sqrt{6}$ using the [7,5] code and block length K = 1024 bits are presented in Fig.13.

We see that Gaussian distributions based on Eq. (40) fairly well predict the numerically obtained distributions of the tap moments, although for the stronger tap we note an obvious discrepancy. The reason for this behavior is that the assumption of uncorrelated BPSK symbol products is not correct due to double counting effects that occur when all available logic strings in one code word are evaluated and the terms are summed up to form the arithmetic mean.

This becomes more pronounced, when the dominant tap $h_v$ is estimated, because then the largest contributions in the perturbations that sum up to $\sigma_{\xi_l}^2$ arise from groups of $M = 5$ terms weighted with $h_v^{M-2} h_l^2$. They stem from products of 5 BPSK symbols that share 4 symbols with the logic string while one is replaced by an adjacent one. 3 of these 5 terms as well as the remaining 2 others are fully correlated. Instead of contributing only 5 times the single variance $N$ of one term they contribute with a $3^2 + 2^2 = 13$-fold contribution. Taking such effects effects into account a corrected Gaussian approximation accurately fits the numerical results.

[4]We use the fact that all channel taps occur with equal probability $1/L$ leading to the factor $1/L^M$. In addition the numbers $x_0, \cdots x_{L-1}$ have to sum to $M$, i.e. $x_0 + x_1 + ... + x_{L-1} = M$.

Fig. 13. Channel estimation in the noiseless case for the 3 tap channel

$h = [1, 2, 1]/\sqrt{6}$. Numerical estimates of the 5th moments of the stronger tap $h_1$ (top) and the weaker tap $h_0$ using the [7, 5] code. The thick lines show the Gaussian approximation using Eq. 40).

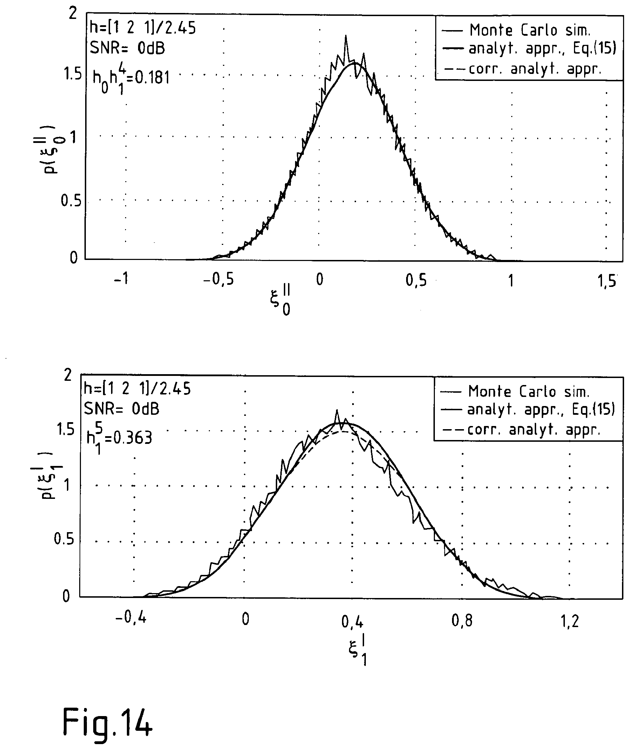

Fig. 14. Channel estimation in the noisy case for the 3 tap channel $h = [1, 2, 1]/\sqrt{6}$: Numerical estimates for first (top) and second tap using the [7, 5] code for SNR = 0 dB.

**4.2 Real-valued Noisy Case**

Including the noise of the received symbols in our analysis $(L + 1)^M$ instead of $L^M$ terms influence the channel tap estimate. The resulting products of the noise terms 2 with variance $\sigma_n^2$ with the channel taps and symbols as well as those among noise terms obviously increase the total variance of $\xi_i$. By the same combinatorial mechanisms as in the noiseless case we now have products of noise and channel terms with exponents that add up to $M$. This leads to products of powers of the noise variance with the complementary power (w.r.t. M) of the power of the channel impulse response. The total MSE of the estimator neglecting correlations is given by treating the noise terms and the channel impulse response as binomial raised to the power of $M$ and subtracting again the term selected by the logic string:

$$\sigma_{\xi_l}^2 = \frac{1}{N}\sum_{p=0}^{M}\binom{M}{p}\sigma^{2p}\left(\sum_{l=1}^{L}|h_l|^2\right)^{M-p} - \frac{|h_l|^2|h_v|^{2M-2}}{N}$$

$$= \frac{\left(\sum_{l=1}^{L}|h_l|^2\right)^M - |h_l|^2|h_v|^{2M-2}}{N} + \cdots \qquad (16)$$

$$\frac{M}{N}\sigma_n^2\left(\sum_{l=1}^{L}|h_l|^2\right)^{M-1} + \cdots + \frac{\sigma_n^{2M}}{N}.$$

**Numerical example:** For the same three tap channel as in Fig. 13 numerically determined distributions for the first two taps are presented in Fig. 14 for an SNR (defined as

$$E\{|\hat{s}|^2\}/E\{|\hat{n}|^2\} = 1/\sigma_n^2)$$

of 0 dB . The same remarks apply as in the noiseless case. With (relatively strong) noise Eq. (40) treating all r.v. as uncorrelated already well predicts the numerical results. Using the same correction factor of 2.6 for terms with one replaced symbol in the logic string the prediction can be made more accurate.

To obtain the MSE of the channel estimator we still have to derive from the prediction of the estimation error of the higher order moments $\xi_v$ and $\xi_l$ the variances of the estimates for the individual channel taps $\hat{h}_v$ and $\hat{h}_l$. This is done in the following for the two variants of the estimator.

$$\hat{h}_v = \xi_v^{1/M}$$

### 4.3 Mapping between $\xi_v$ and

To obtain the mean square error for the estimate of the principal channel tap $h_v$ we have to determine the variance of the r.v. $\hat{h}_v$. To obtain its pdf we start from (note, that we consider real valued channels for now and M is odd)

$$\xi_v = h_v|h_v|^{M-1} = h_v^M . \qquad (42)$$

Calculating the distribution function (cdf) of the Gaussian density of $\xi_v$ given as (we omit the subscript $v$ at mean $\mu\xi_v$ and variance $\sigma\xi_v$ of $\xi_v$ for readability)

$$p(\xi_v) = \frac{1}{\sqrt{2\pi}\sigma_\xi} \exp\left\{ -\frac{(\xi_v - \mu_\xi)^2}{2\sigma_\xi^2} \right\} \qquad (43)$$

that can be expressed as an error function we arrive at the pdf of the transformed random variable $\hat{h}_v$:

$$p(\hat{h}_v) = \frac{M}{\sqrt{2\pi}\sigma_\xi} \hat{h}_v^{M-1} \exp\left\{ -\frac{(\hat{h}_v^M - \mu_\xi)^2}{2\sigma_\xi^2} \right\} . \qquad (44)$$

To obtain the variance of this r.v. we need the first and second moments. Fortunately, these can be calculated in closed form as

$$E\{\hat{h}_v\} = \frac{M}{\sqrt{\pi}} 2^{(M+1)/(2M)} \sigma_\xi^{(1-M)/M} e^{-\mu_\xi^2/(2\sigma_\xi^2)} \dots$$
$$\Gamma(\tfrac{2M+1}{2M}) \, {}_1F_1\left( \frac{2M+1}{2M}, 3/2, \frac{\mu_\xi^2}{(2\sigma_\xi^2)} \right) \qquad (45)$$

and

$$E\{\hat{h}_v^2\} = \frac{2^{1/M}}{\sqrt{\pi}} \sigma_\xi^{2/M} e^{-\mu_\xi^2/(2\sigma_\xi^2)} \Gamma(\tfrac{M+2}{2M}) \dots$$
$$ {}_1F_1\left( \frac{M+2}{2M}, 1/2, \frac{\mu_\xi^2}{(2\sigma_\xi^2)} \right) . \qquad (46)$$

Here $\Gamma(\cdot)$ and $_1F_1(a,b,c,)$ denote the Gamma and (confluent) hypergeometric functions, respectively [5]. The variance of the estimate $\hat{h}_\upsilon$ is then obtained as usual from

$$\sigma^2_{\hat{h}_\upsilon} = E\{\hat{h}^2_\upsilon\} - E^2\{\hat{h}_\upsilon\} . \qquad (47)$$

The consequence of this nonlinear transformation is, that the estimator becomes biased (even more so, when a certain tail of the Gaussian distribution of $\xi_\upsilon$ changes sign), because the mean of $\hat{h}_\upsilon$ is not equal any more to the $M^{th}$ root of $\mu_\xi$.

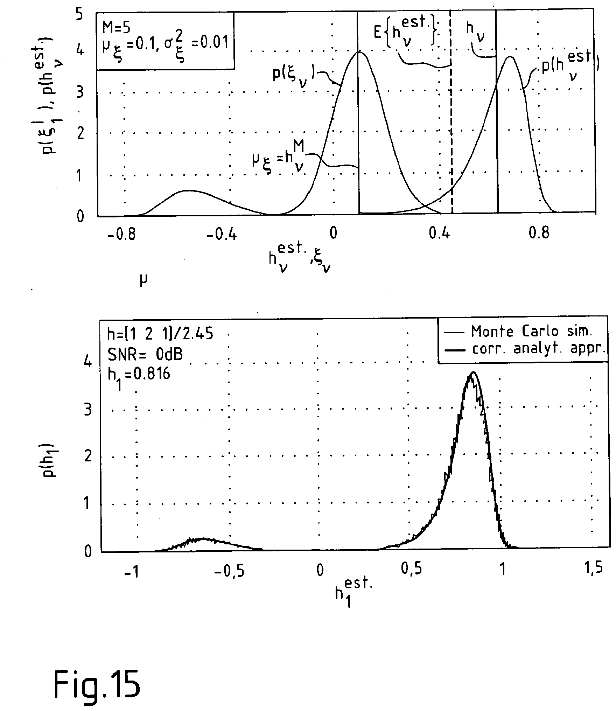

Fig. 15.  Transformation of the Gaussian r.v. $\xi_\upsilon$ to $\hat{h}_\upsilon = \xi_\upsilon^{1/M}$ for the estimator variance $\sigma_\xi = 0.01$ (top). The numerically computed distribution of $\hat{h}_1$ at SNR = 0 dB (bottom) corresponding to Fig. 14 agrees very well with the prediction according to Eq. (34).

Schematically this is presented in Fig. 15 (top). The Gaussian distribution of $\xi_\upsilon$ is compared to the transformed pdf of

$$\hat{h}_\upsilon = \xi_\upsilon^{1/M} .$$

The mean of $\hat{h}_\upsilon$ differs markedly from the true value

$$h_v' = \mu_{\xi_v}^{1/M} .$$

The numerically derived distribution of $h_1$ at SNR = 0 dB obtained by transforming the distribution shown in Fig. 14 is shown in the bottom part.

The larger the absolute value of the true channel tap deviates from one, the stronger will be the bias and the variance of the estimation error. This is the most important reason for switching to the second estimator variant, when evaluating the non-dominant terms.

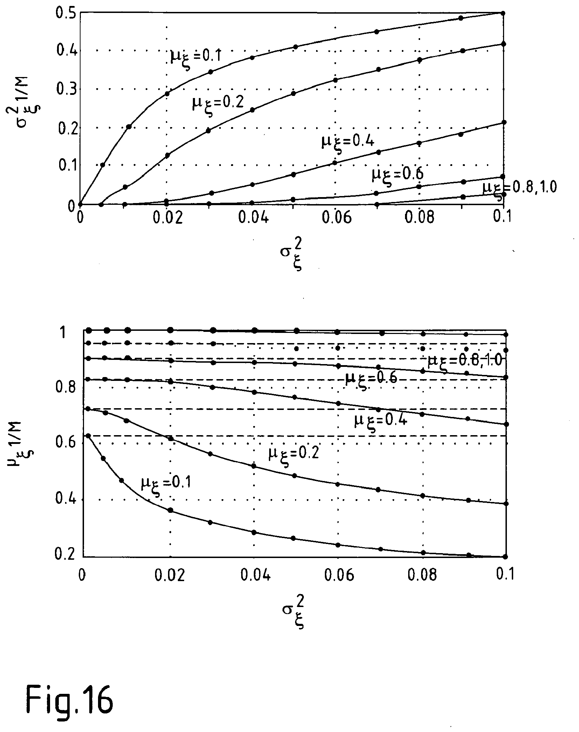

This is demonstrated by presenting the resulting transformation of mean and 2 variance as a function of the 'measurement' variance $\sigma_\xi^2$ in Fig. 16 using Eqs. (45), (46). The variance of the tranformed variable $\sigma_{\xi^{1/M}}^2$ rises much faster with the 2 variance of $\sigma_\xi^2$, when the tap magnitude $\mu_{\xi_v}$ to be estimated is small (top). Correspondingly the allowed variance (necessary precision) to keep the bias acceptable becomes smaller.

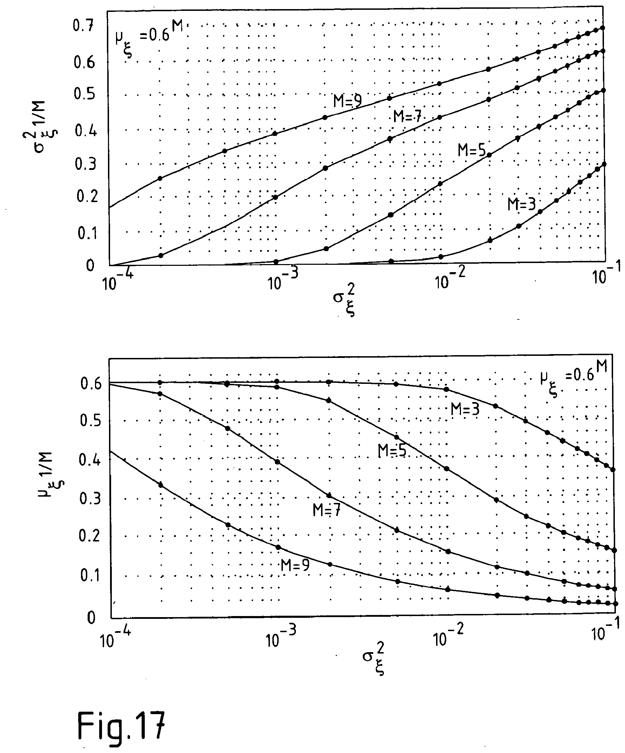

The influence of the logic string length $M$ is shown in Fig. 17 for a fixed mean $\mu_\xi = 0.6$ of the r.v. $\xi_v$. The resulting variance and mean of the estimated random variable $\hat{h}_v = \xi^{1/M}$ is presented as function of $\sigma_\xi^2$ again. It becomes obvious that shorter logic strings are clearly preferable.

Considering Eqs. (40), (41) derived for the variance of the random variable $\xi_l$ we conclude that it is advantageous for two reasons to switch from estimator variant I to II after having estimated the strongest tap: one the one hand we decrease the term that is subtracted from the power of the channel impulse response raised to $M$, if we apply the same shift $l$ to all other receive symbols that form a logic string. Secondly we run into the problem of taking the $M^{th}$ root of a Gaussian r.v. with smaller and smaller mean, while estimator II derives $\hat{h}_l$ from $\xi_l$ by multiplying with

$$\hat{h}_v^{-M+1} .$$

If the delay $l$ is only applied to one receive symbol (while the others are delayed by $v$) we can in addition exploit equivalent forms of the shifts w.r.t. to all member symbols of the logic string. This improves the statistics and is exploited in [4].

Fig. 16. Transformation of mean and variance of the Gaussian r.v. $\xi_v$ for $M = 5$ to the corresponding mean and variance of $\hat{h}_v$.

Fig. 17. Transformation of mean and variance of the Gaussian r.v.

$\xi_v$ to $\hat{h}_v = \xi^{1/M}$ for $M = 3,5,7,9$.

$$\hat{h}_l = \xi_l/\hat{h}_v^{M-1}$$

### 4.4 Mapping between $\xi_l$ and

To obtain the mean square error for the estimate of channel tap $h_1$ we would have to determine the variance of the random variable $\hat{h}_l$ derived from

$$\xi_l = h_l \hat{h}_v^{M-1} \qquad (48)$$

Although one can derive the pdf for $\hat{h}_v^{M-1}$ · - · the variance of $\hat{h}_l$ is ill-defined due to the possibility of $\hat{h}_v^{M-1}$ becoming zero, because the Gaussian distribution it follows, extends to $\pm\infty$. The best one can say is that for fixing the random variable $\hat{h}_v$ at a given value (as an instantaneous estimate) the resulting distribution $p(\hat{h}_l)$ is also Gaussian and that the variance of $\hat{h}_l$ is scaled accordingly.

### 4.5 Estimator MSE for Different Codes

To see what can be gained by using shorter logic strings we compared the MSE defined as the mean of $\Delta = \sum_l(h_l - \hat{h}_l)^2$ of the blindly estimated impulse response for 4 convolutional codes with generators G = [1, 5]$_8$, [7, 5]$_8$, [21,

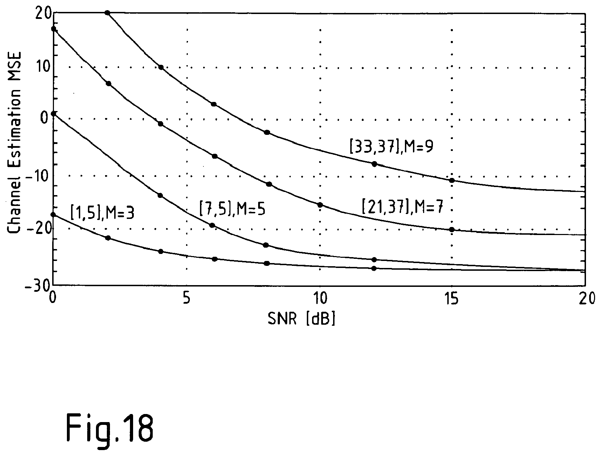

$37]_8$, $[33, 37]_8$ which produce logic strings of lengths M = 3,5,7 and 9, respectively. Again taking the real channel impulse response

$$h = [1, 2, 1]/\sqrt{6}$$

as a test case and a block length of K = 1024 bits, the results are collected in Fig. 18, where the decrease of $\mu_\Delta = E\{\Delta\}$ is shown as a function of SNR.

Fig. 18. MSE channel estimation error compared for different convolutional codes with logic strings of legnths 3, 5, 7 and 9.

### 4.6 Extension to the complex case

The estimator analysis for real channels can be extended to complex channels, noting that the products of BPSK symbols remain binomially distributed and the weights coming from products of powers of the channel taps become complex. By the same arguments as in the real case the power of the data dependent noise terms will be the product of the number of evaluated logic strings N and the powers of the taps of the channel impulse response and we end up again at Eq. (40) or with additional complex additive white Gaussian noise at Eq. (41).

For the $M^{th}$ moment $\xi_l$ we obtain a *two*-dimensional Gaussian density centered around $\mu_{\xi_l} = h_l|h_v|^{M-1}$ with variance $\sigma^2_{\xi_l}$. The amplitude distribution $p(|\xi_l|)$ is given by a Ricean distribution according to

$$p(|\xi_l|) = \frac{|\xi_l|}{\sigma^2_{\xi_l}} \exp\left\{-\frac{|\xi_l|^2 + |\mu_{\xi_l}|^2}{2\sigma^2_{\xi_l}}\right\} I_0\left(\frac{|\xi_l||\mu_{\xi_l}|^{M-1}}{\sigma^2_{\xi_l}}\right) \quad (49)$$

where $I_0(\cdot)$ denotes the zeroth order modified Bessel function of the first kind. The transformation from $\xi_l$ to $\hat{h}_l$ is qualitatively similar as in the real case, but with an angular spread around the true argument of the tap.

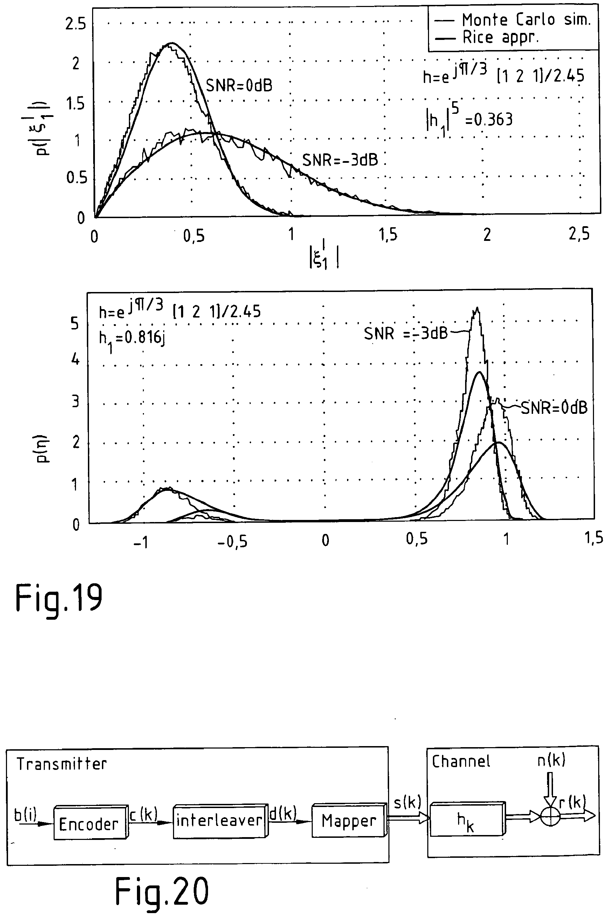

We demonstrate this again for the [7,5] code and the previously used channel impulse response rotated by 60°: $h = e^{j\pi/3}[1, 2, 1]/\sqrt{6}$. The estimate of the strongest tap at SNR values of -3 and 0 dB (equal noise power in real and imaginary dimension) is shown in Fig. 19. The approximation of the amplitude distribution of $\xi_l$ with a Ricean distribution according to Eq. (41) fits well.

The channel tap distribution now is also two-dimensional but can be approximated with Eq. (44), when projecting the tap estimate onto the axis defined by the argument of the estimated tap. Corresponding distributions for SNR = -3 and 0 dB are shown at the bottom of Fig. 19. The complex estimator performs slightly better than in the real case for the same SNR, because part of the noise is orthogonal to the direction of the tap and does not affect the estimated amplitude.

Fig. 19. Estimation of a complex channel impulse response $(h = e^{j\pi/3}[1,2,1]/\sqrt{6})$: Numerical evaluation of the amplitude distribution of the 5$^{th}$ moment of the strongest tap (top) and the projected tap distribution $\hat{h}_1$ derived from it (bottom).

According to an example, the MSE for a blind higher order channel estimator is based on the parity check constraints of a channel code.

For the variance of the higher order estimate $\xi$ we could obtain a closed form expression that gives insight into the performance of the estimator. The main result is, that short logic strings are (much) better than longer ones. The main reason is that estimating the power of channel taps with magnitude less than one brings the average estimate nearer to zero, if the exponent gets larger. This increases the possibility that the estimate changes sign due to the additional noise. According to an example, due to the nonlinear transformation between the estimated quantity $\xi$ and the channel taps $\hat{h}$ the estimator becomes biased.

It is useful to compare this observation with irregular LDPC codes of low check degree. The application of codes with a relative large number of check equations with small check degree together with the cancellation of the data dependent estimator noise as advocated in our companion [4] paper using iterative soft decoding and equalization might lead to practically useful receiver algorithms.

**References**

[1] D. Godard, "Self-Recovering Equalization and Carrier Tracking in Two-Dimensional Data Communication Systemes," IEEE Trans. Comm., vol. 28, 1980.
[2] L. Tong and S. Perreau, "Multichannel Blind Identification: From Subspace to Maximum Likelihood Methods," IEEE Proceedings, vol. 86, pp. 1951-1968, Oct. 1998.
[3] A. Scherb, V. Kü̈hn, and K. D. Kammeyer, "On Phase Correct Blind Deconvolution exploiting Channel Coding," in ISSPIT '03, Darmstadt, Germany, Dec. 2003.
[4] A. F. dos Santos, W. Rave, and G. Fettweis, "Blind Turbo Channel Estimation Exploiting Parity Check Equations," in 7 ITG Conf. on Source and Channel Coding, 2008.
[5] M. Abramowitz and I. Stegun, Handbook of Mathematical Functions. Dover Publications, 1968.

However, the key idea of this paper is to exploit the statistical dependencies caused by channel encoding to identify the channel blindly. According to a preferred embodiment of the invention, if the code has special properties, in contrast to HOS based methods phase correct estimation is also feasible.

According to an example, a transmission model is used.

According to an example, a concept of "logic strings" is introduced in order to describe the statistical dependencies caused by channel coding. I

According to an example, an algorithm to blindly estimate the channel exploiting channel coding is used. The performance of the algorithm is evaluated on the basis of simulation results in

II. SYSTEM MODEL

Fig. 20.   System Model

Consider an information data sequence of binary bits $\mathbf{b} = [b(1), \cdots, b(I)]^T$ of length $I$, where $b(i) \in \{0,1\}$. As shown in Fig. 20 the bits are encoded in order to protect them against errors. The encoded data of length $K$ are denoted by $\mathbf{c} = [c(I),- \cdots ,c(K)]^T$, where $K > I$, $c(k) \in \{0,1\}$ and C is the set of all valid code words.

The relation between origin and encoded data is given by

$$c(k) = g_{k,1}b(1) \oplus g_{k,2}b(2) \oplus \cdots \oplus g_{k,I}b(I), \quad (1)$$

where $g_{k,}i \in \{0,1\}$ and $\oplus$ is the XOR operator. Therefore, a vector matrix notation is given by

$$\mathbf{c} = (\mathbf{Gb})_{\mathrm{mod}_2}, \quad (2)$$

where $g_{k,}i$ is the $k$-th row and $i$-th column element of G. The encoded data c are interleaved by

$$\mathbf{d} = \mathbf{Pc}, \qquad\qquad (3)$$

where $\mathbf{P} \in \{0, 1\}^{K \times K}$ contains by definition exactly one nonzero element in each row and column. The row index of the nonzero element in the $k$-th column will be denoted by $\pi(k)$, such that $c(k) = d(\pi(k))$ holds.

The encoded bits are mapped onto BPSK symbols $s(k)$ by assigning 0 =>• 1 and 1 =>•-1.

The transmission is characterized by the discrete time channel impulse response (CIR) $h_K$ of order $H$ including pulse shaping and receive filter. The receiver input can be expressed as

$$r(k) = \sum_{\kappa=0}^{H} h_\kappa s(k - \kappa) + n(k). \tag{4}$$

III. PROPERTIES OF ENCODED SEQUENCES

*A. The Concept of Logic Strings*

In order to exploit the statistical dependencies caused by the channel coding, we make use of a concept termed as

logic strings[1] which is defined as follows:
**Definition 1:** A set of encoded bits is called *logic string,* when the XOR-conjunction of its elements always gives a zero for each arbitrary original data sequence.
In order to explain this definition, let us assume that a rule exists drawing $N$ logic strings of length $M$ according to an encoding scheme. We denote by $\mathcal{A}$ the set of cardinality $N$ containing all time indices corresponding to logic strings of this type. Let

$$[\tau_{1,n}, \tau_{2,n}, \cdots, \tau_{M,n}] \in \mathcal{A}$$

be the time indices corresponding to the n-th valid logic string. Then,

$$c(\tau_{1,n}) \oplus c(\tau_{2,n}) \oplus \cdots \oplus c(\tau_{M,n}) = 0 \tag{5}$$

holds for $n = 1, ..., N$.
After interleaving the string $d(\pi_{1,n}) \oplus d(\pi_{2,n}) \oplus d(\pi_{M,n}) =$ is equivalent to (5), where $\pi_{n,m} = \pi(T_{n,m})$ and the set of valid logic strings is determined by $B =$

$$\{[\pi(\tau_{1,n}), \pi(\tau_{2,n}), \cdots, \pi(\tau_{M,n})] \mid [\tau_{1,n}, \tau_{2,n}, \cdots, \tau_{M,n}] \in \mathcal{A}\}.$$

After mapping the encoded bits onto signal space, the XOR operator in (5) can be replaced by multiplications such that

$$s(\pi_{1,n})s(\pi_{2,n}) \cdots s(\pi_{M,n}) = 1 \tag{6}$$

holds. Furthermore, the *M*-th order moments for any

$$k_1, k_2, \cdots, k_M \notin B$$

vanish, i.e.

$$E\{s(k_1)s(k_2) \cdots s(k_M)\} = 0. \tag{7}$$

*B. Asymmetry*

The goal of phase correct channel estimation can be attained, if the encoding scheme is non-symmetric, where the term "asymmetric" is defined as follows:

**Definition 2:** A code is called *asymmetric* if the negation of each valid code word is not a valid code word, i.e.

$$\mathbf{c} \in \mathcal{C} \Rightarrow \overline{\mathbf{c}} \notin \mathcal{C}. \tag{8}$$

Note that if the code incorporates a logic string of odd length *M*, the code is always non-symmetric. The requirements will become more clear in the example given below.

*C. Example: Convolution Code*

As example we examine the half rate (7,5)-code. The encoding rule for odd indexed c can be expressed as

$$c(2n-1) = b(n) \oplus b(n+1) \oplus b(n+2) \quad ; \quad n = 1, \cdots, N \tag{9}$$

and for even indexed c as

$$c(2n) = b(n) \oplus b(n+2) \quad ; \quad n = 1, \cdots, N \tag{10}$$

[1] In terms of coding theory, the concept of logic strings is closely related to the representation of the parity check matrix and the null space corresponding to the code space, respectively. An important difference is that the length of a set of logic strings is fixed, whereas e.g. the number of ones in each column vector of a syndrome matrix may vary.

A logic string of length 5 for this encoder is given by

$$
\begin{aligned}
c(2n-1) &\oplus c(2n) \oplus c(2n+2) \oplus c(2n+3) \oplus c(2n+4) \\
&= b(n) \oplus b(n+1) \oplus b(n+2) \\
&\oplus b(n) \oplus b(n+2) \\
&\oplus b(n+1) \oplus b(n+3) \\
&\oplus b(n+2) \oplus b(n+3) \oplus b(n+4) \\
&\oplus b(n+2) \oplus b(n+4) \\
&= 0.
\end{aligned} \tag{11}
$$

A rule displaying all time indices $T_{TO_J}$, corresponding to the set of *N* logic strings of length *M* = 5 is given by )

$$\tau_{m,n} = \begin{cases} 2n+m-2 & m = 1,2 \\ 2n+m-1 & m = 3,4,5 \end{cases}. \tag{12}$$

There may exist other logic strings of higher length, which can be found by a heuristic search. However, this is the shortest string for this code. Due to the odd number of elements of the logic strings defined in (12), this code is also non-symmetric.

IV. ALGORITHM

On the basis of the results of Section III it is now possible to derive a simple blind channel estimator for the *l*-th channel coefficient exploiting the properties of (6) and (7). As to be seen an estimate of the *l*-th channel gain can be obtained by the expectation of the product of the received data according to an arbitrary logic string: (8)

$$\check{h}_l = E\left\{ r(\pi_{1,n} + l) \prod_{m=2}^{P+1} r(\pi_{m,n}) \prod_{m=P+2}^{M} r^*(\pi_{m,n}) \right\}, \quad (13)$$

where $P = (M - 1)/2$. Note that apart from the first factor the number $P$ of the complex conjugated factors is equal to the number of non complex conjugated factors. This relation holds only, if the length of the concerning logic string is odd. Remember that in this case the code is always asymmetric and therefore we can achieve a phase correct channel estimation. As we will see, the complex conjugation of $P$ factors in (13) yields a phase correct estimator.

After replacing $r(k)$ in (13) by the r.h.s of (4) we obtain

$$\check{h}_l = E\left\{ \left( \sum_{\kappa_1=0}^{H} h_{\kappa_1} s(\pi_{1,n} + l - \kappa_1) + n(\pi_{1,n} + l) \right) \right.$$
$$\prod_{m=2}^{P+1} \left( \sum_{\kappa_m=0}^{H} h_{\kappa_m} s(\pi_{m,n} - \kappa_m) + n(\pi_{m,n}) \right) \quad (14)$$
$$\left. \prod_{m=P+2}^{M} \left( \sum_{\kappa_m=0}^{H} h^*_{\kappa_m} s^*(\pi_{m,n} - \kappa_m) + n^*(\pi_{m,n}) \right) \right\}.$$

In order to obtain a more illustrative expression, we want to exchange products and sums in (14). Since the noise is i.i.d, all elements incorporating noise vanish. Therefore, in the sequel noise will be neglected.

Let

$$\mathcal{K} = \left\{ (\kappa_1, \cdots, \kappa_M) | 0 \le \kappa_m \le H \right\}$$

be the set of $M$-tuples with cardinality $(H+1)^M$ consisting of all combinations of indices which occur in (14). Now, (14) can be rewritten as (15). Assuming that no logic string is accidentally[2] caught in $v(\kappa_1, \cdots, \kappa_M)$ in (15), due to (7) only the left term assigned to the logic string $n$ remains such that

$$\check{h}_l = h_l |h_0|^{M-1}. \quad (16)$$

Hence, the estimate $\check{h}_l$ consists of the true channel coefficient $\check{h}_l$, which is weighted by a real positive factor $|h_0|^{M-1}$. Unfortunately, in real applications the expectation in (15) is not available. Thus, it must be approximated by averaging over $N$ logic strings.

$$\check{h}_l \quad = \quad \frac{1}{N}\sum_{n=1}^{N} r(\pi_{1,n}+l) \prod_{m=2}^{P+1} r(\pi_{m,n}) \prod_{m=P+2}^{M} r^*(\pi_{m,n}) \quad (17)$$

$$= \quad h_l |h_0|^{M-1} \frac{1}{N}\sum_{n=1}^{N} \prod_{m=1}^{M} s(\pi_{m,n}) \qquad (18)$$

$$+ \sum_{(\kappa_1,\cdots,\kappa_M)\in\mathcal{K}\backslash(l,0,\cdots,0)} u(\kappa_1,\cdots,\kappa_M)\hat{v}(\kappa_1,\cdots,\kappa_M),$$

where

$$\hat{v}(\kappa_1,\cdots,\kappa_M)$$

$$= \quad \frac{1}{N}\sum_{n=1}^{N} \left( s(\pi_{m,n}+l-\kappa_1) \prod_{m=2}^{M} s(\pi_{m,n}-\kappa_m) \right) \qquad (19)$$

In the face of a finite number N, the term $\hat{v}(\kappa_1,\cdots,\kappa_M)$ does not become exactly zero for

$$(\kappa_1,\cdots,\kappa_M) \in \mathcal{K}\backslash(l,0,\cdots,0).$$

Therefore, an error remains weighted by $u(\kappa_1,\cdots,\kappa_M)$. The error power depends on the characteristics of the channel and how it weights the useful part in relation to the remaining error. However, in the case of ill conditioned channel characteristics ($|h_0| \ll |h_\kappa| : \kappa \neq 0$) the performance of the estimator might become even worse. In order to combat this effect, we suggest to insert a linear equalizer $e = [e_L, \cdots, e_0]^H$ of order $L$ at the receiver.

On the basis of the channel estimate the filter coefficients can be adjusted. Otherwise, an appropriate linear filter e may assist reducing the impact of the error in $\hat{v}(\kappa_1,\cdots,\kappa_M)$. Therefore, we suggest an iterative two-step algorithm, where channel estimation and filter adaptation are repeated alternately until the algorithm converges.

Sampling $L + 1$ data at the receiver, we obtain

$$\mathbf{r}(k) = \mathbf{H}\mathbf{s}(k) + \mathbf{n}(k) \qquad (20)$$

[2]In order to limit the effort of decoding, the encoder usually shows a periodical structure. It can be shown that in these case also the logic strings may have a periodical structure. Due to the fact that the channel causes a weighted superposition of encoded data, it is not unlikely that beside the logic string of interest a parasitic logic string is caught. In order to avoid this effect interleaving the encoded data is mandatory for our approach.

where $s(k) = [s(k - L - H + k_0), \cdots, s(k + k_0)]$ with $k_0$ is an arbitrary delay in the interval $H < k_0 < L$, $n(k) = [n(k-L),\cdots, n(k)]$

and $n(k)$ is additive white Gaussian noise of power $E\{|n(k)|^2\} = \sigma_n^2$. The $(L + 1 \times L + H + 1)$- matrix **H** is defined by

$$[\mathbf{H}]_{\nu,\mu} = \begin{cases} h_{H+\nu-\mu} & : \quad 0 \le \nu - \mu \le H \\ 0 & : \quad \text{else} \end{cases} \qquad (21)$$

Let us denote the output of the filter by

$$
\begin{aligned}
y(k) &= \mathbf{e}^H \mathbf{r}(k) \\
&= \mathbf{e}^H \mathbf{H}\mathbf{s}(k) + \mathbf{e}^H \mathbf{n}(k) \\
&= \mathbf{w}^H \mathbf{s}(k) + \eta(k),
\end{aligned}
\tag{22}
$$

where $w = [w_{L+H}, \cdots, w_0]^H$ is the joint impulse response of channel and filter and $\eta(k) = e^H n(k)$.
The channel estimate can be improved using the outputs of the filter by replacing the $M - 1$ last factors in (17) by the filter outputs we obtain (23), where

$$
\mathcal{L} = \left\{ \left( \kappa_1, \cdots, \kappa_M \right) \right\}
$$

with $0 \le \kappa_1 \le H$ and $0 \le \kappa_m \le H + L$ for $m = 2, \cdots, M$ is the set of M-tuples with cardinality $(H\text{-}\backslash\text{-}1)(H + L + 1)^{M}\text{-}1$ and from (23) and (24) it can be seen, that if e nearly represents the ideal channel equalizer, the factors $\tilde{u}(\kappa_1, \cdots, \kappa_M)$ for

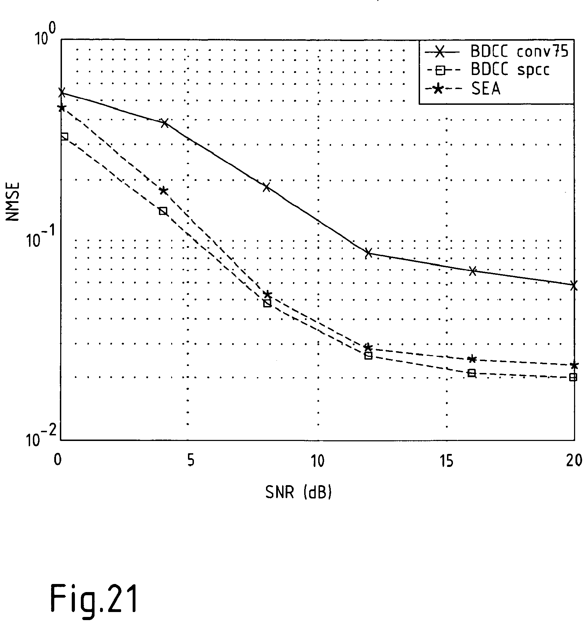

$$
\left( \kappa_1, \cdots, \kappa_M \right) \in \mathcal{L} \setminus (l, 0, \cdots, 0)
$$ weighting the remaining errors become very small.

On the basis of the channel estimate the filter's coefficients can be adjusted, e.g. by the MMSE approach [6] with

$$
\mathbf{e}' = \mathbf{\Phi}_{rr}^{-1} \tilde{\mathbf{h}},
\tag{25}
$$

where $\tilde{h} = [0, \cdots, 0, \hat{h}(0), \cdots, \hat{h}(H), 0, \cdots, 0]^T$ is a vector of length $L$ with $k_0$ zeros at the beginning $\mathbf{e}'$ and $\Phi_{rr} = E\{r(k)r^H(k)\}$ is the covariance matrix of the receive signal. In order to get close to the absolute of the true CIR and to avoid a bit overflow, e' should be normalized by

$$
\mathbf{e} = \frac{\mathbf{e}'}{\sqrt{\mathbf{e}'^H \mathbf{\Phi}_{rr} \mathbf{e}'}}.
\tag{26}
$$

In the initial step e should contain at least one nonzero entry at index $H < k_0 < L$ in order to ensure a nonzero entry of the joint impulse response w at index fc. As initialization $e_0 = \delta_{k_0}$ seems to be a good choice, where $\delta_{k_0}$ is a unit vector and the $k_0$-th element is 1 . The algorithm is summarized in Tab. I.

$$
h_l = h_l |h_0|^{M-1} E\left\{ \prod_{m=1}^{M} s(\pi_{m,n}) \right\} + \sum_{(\kappa_1,\cdots,\kappa_M)\in\mathcal{K}\backslash(l,0,\cdots,0)} \underbrace{h_{\kappa_1+l} \prod_{m=2}^{P+1} h_{\kappa_m} \prod_{m=P+2}^{M} h_{\kappa_m}^*}_{u(\kappa_1,\cdots,\kappa_M)} \underbrace{E\left\{ s(\pi_{m,n}+l-\kappa_1) \prod_{m=2}^{M} s(\pi_{m,n}-\kappa_m) \right\}}_{v(\kappa_1,\cdots,\kappa_M)}
$$
$$\tag{15}$$

TABLE I

| PHASE CORRECT BLIND DECONVOLUTION EXPLOITING CHANNEL CODING (BDCC) | | |
|---|---|---|
| 1 | : | Initialize $e_0 = \delta_{k_0}$ and the iteration counter $\iota = 0$. |
| 2 | : | repeat |
| 3 | : | Estimate the channel by (23). |
| 4 | : | Update the linear equalizer by (25) and (26). |
| 5 | : | Set $\iota = \iota + 1$. |
| 6 | : | end |

## V. SIMULATION RESULTS

The estimation performance is evaluated over normalized mean squared error (NMSE) between the true channel and the estimated channel, which is defined as

$$\text{NMSE} = \frac{\sum_{l=0}^{H} |h_l - \hat{h}_l|^2}{\sum_{l=0}^{H} |h_l|^2}. \qquad (27)$$

The data are encoded by a (75)-convolutional (conv75) encoder with rate 1/2, which comprises $K/2$ - 1 logic strings of length $M$ = 5, and by a single parity check code with rate 2/3 (spcc), which comprises $K/3$ logic strings of length $M$ = 3. As reference, the super exponential algorithm (SEA) [2] is used, which is a typical HOS-based method. As in the approach, SEA will also consist of several iterations, where jointly a linear filter is adapted and the channel is estimated.

Fig. 21. NMSE vs. SNR

In simulations according to a preferred embodiment of the invention d a 3-tap Rayleigh fading channel is used with constant coefficients for a block of $K$ = 400 symbols (block fading channel). The order of the linear filter was $L$ = 10 and the algorithms was stopped after 5 iterations. The results are averaged over 5000 channel realizations.

Fig. 21 shows the NMSE performance versus signal to noise ratio (SNR). It can be seen, that the performance of the blind deconvolution exploiting channel coding (BDCC) depends strongly on the length $M$ of the particular logic strings. The reason may be on the one hand that the number of terms, which are accumulated in (23) is $(H+1)^M$ and consequently the performance is very sensitive with respect to $M$. On the other hand also the impact of noise on the estimation must be taken into account. For small $M$ the BDCC performs similarly or slightly better than SEA.

According to an example, an iterative algorithm is used, which blindly identifies the channel exploiting the statistical dependencies of the transmitted signal caused by channel coding. The algorithm jointly updates channel estimates and adapts a linear equalizer. For asymmetric channel coding, the algorithm delivers phase correct estimates.

It was shown by simulations that the performance of the proposed algorithm depends on the properties of the code and the length of its logic strings, respectively. In the case of short logic strings the algorithm performs slightly better than the HOS based methods and additionally delivers phase correct estimates.

The invention is solely defined by the appended claims.

One of the aspects is that a transmitter is composed by a multilevel encoder as it is for example presented in Figure 1.

A receiver is composed by a turbo equalizer.

Preferrably the turbo equalizer is composed by a channel estimator, an equalizer and a decoder.

There is an algorithm used especially in the equalizer and/or in the decoder.

This algorithm is for example a soft input output (equalizing/decoding) algorithm.

An example includes an iterative procedure. At the first iteration (when no a-priori values from the decoder are available) the channel is estimated using according a suitable mechanism, especially using eq. 14 and 17.

The first level can be used for channel estimation. Another alternative is to estimate the channel based in all levels.

So certain combinations of levels are suitable.

For further iterations different equations can be used, especially eq. 23 and 25.

The method is independent from the number of iterations between channel estimator, equalizer and decoder.

It is especially to carry out the method until one or more defineable stop criteria is/are reached.

REFERENCES

[1] B. Jelonnek D. Boss and K.D. Kammeyer. Eigenvector Algorithm for Blind MA System Identification. Elsevier Signal Processing, 66(1):1-26, April 1998. [2] o. Shalvi and E. Weinstein. Super-exponential methods for blind deconvolution. IEEE Trans. on Information Theory, 39:504-519, March 1993. [3] L. Tong and s. Perreau. Multichannel Blind Identification: From Subspace to Maximum Likelihood Methods. IEEE Proceedings, 86(10):1951-1968, October 1998. [4] C.H. Chen C.Y. Chi, C.Y. Chen and C.C. Feng. Batch Processing Algorithms for Blind Equalization using Higher Order Statistics. IEEE Signal Processing Magazine, 20(1):25-49, January 2003. [5] J. Mannerkoski and v. Koivunen. Autocorrelation properties of channel encoded sequences- Applicability to blind equalization. IEEE Trans. on Signal Processing, 48:3501-3507, December 2000. [6] S.M. Kay. Fundamentals of Statistical Signal Processing, Volume I: Estimation Theory. Prentice Hall PTR, 1993.

$$
\begin{aligned}
\dot{h}_l &= \frac{1}{N} \sum_{n=1}^{N} r(\pi_{1,n} + l) \prod_{m=2}^{P+1} \mathbf{e}^H \mathbf{r}(\pi_{m,n}) \prod_{m=P+2}^{M} \mathbf{r}^H(\pi_{m,n})\mathbf{e} \\
&= h_l |w_0|^{M-1} \frac{1}{N} \sum_{n=1}^{N} \prod_{m=1}^{M} s(\pi_{m,n}) + \sum_{(\kappa_1,\cdots,\kappa_M)\in\mathcal{L}\setminus(l,0,\cdots,0)} \tilde{u}(\kappa_1,\cdots,\kappa_M)\dot{v}(\kappa_1,\cdots,\kappa_M) \\
&\approx h_l |w_0|^{M-1},
\end{aligned}
\tag{23}
$$

## Claims

1. A method for selecting transmission channels in a multi-channel communication system for use for data transmission wherein data s(k) are sent at a time k, the data s(k) are received, wherein r(k) denotes data which are received at the time k, and wherein a comparison between sent data and received data occurs according to the formula:

$$
r(k) = \sum_{l=0}^{L-1} h(l)s(k-l) + n(k)
$$

wherein h(0)... h(L-1) denotes a channel impulse response with length L and n(k) denotes noise signals at the receiver, **characterized in,**
**that** a blind channel estimator is modified for receiving feedback from a decoder with a residual error for an estimated tap due to a usage of a time average instead of a true expectation, wherein an a-posteriori output of the decoder, $L^D(c)$, with c being a vector of coded bits, and channel taps estimated in a previous iteration of a turbo equalizer, $^u h$ are used for cancelling the residual error,
wherein a linear code is **characterized by** its generator matrix, G, and parity check matrix, H of size M $\times$ N, with M and N being natural numbers:

$$c = Gb,$$

$$Hc = 0,$$

with **b** being a vector of information bits and a set A = {[λm,1, ... , λm,p, ... , λm,P]} with P being a natural number, the set A being a set of M vectors with the p-th column indices of the nonzero elements of the m-th row of the parity check matrix in such a way that:

$$\sum_{\substack{k_i=1, \\ \{k_1,...,k_P\}\in\mathcal{A}}}^{P} c(k_i) = 0$$

and

$$\sum_{\substack{k_i=1, \\ \{k_1,...,k_P\}\notin\mathcal{A}}} c(k_i) = \left\{ \begin{array}{c} 0 \\ 1 \end{array} \right.$$

such that an I-th tap of a channel can be estimated by using a $P_q$ th-order moment according to

$$\xi_l^q = E\left\{ r\left(\pi_{m,q}+l\right) \prod_{\substack{i=1 \\ i\neq q}}^{\tilde{P}+1} r\left(\pi_{m,i}+v\right) \prod_{\substack{i=\tilde{P}+1 \\ i\neq q}}^{P} r^*\left(\pi_{m,i}+v\right) \right\},$$

wherein P~ = (P+1)/2 ; q = {1, ... , p, ..., P}, with q and I natural numbers, and *v* are the estimated value and the estimated position of a strongest tap of the channel wherein by setting I = v a main tap of the channel is estimated and afterwards other taps are calculated as a function of an absolute value of the main tap for I ≠ v, such that the estimated value of the main tap is given by

$$\widehat{h}_l = \frac{1}{P}\sum_{q=1}^{P} \xi_l^q.$$

2. Transceiver comprising a transmitter and a receiver for single carrier communication working over multipath channels, where the transmitter is composed by a multilevel encoder, wherein the receiver is composed by a blind turbo equalizer adapted to select transmission channels in a multi-channel communication system for use for data transmission wherein data s(k) are sent at a time k, the data s(k) are received, wherein r(k) denotes data which are received at the time k, and wherein the blind turbo equalizer is adapted to compare sent data and received data according to the formula:

$$r(k) = \sum_{l=0}^{L-1} h(l)s(k-l) + n(k)$$

wherein h(0)... h(L-1) denotes a channel impulse response with length L and n(k) denotes noise signals at the receiver, **characterized in,**

**that** the blind turbo equalizer is adapted to modify a blind channel estimator for receiving feedback from a decoder with a residual error for an estimated tap due to a usage of a time average instead of a true expectation, wherein an a-posteriori output of the decoder, $L^D$(c), with c being a vector of coded bits, and channel taps estimated in a previous iteration of a turbo equalizer, $^U$h are used for cancelling the residual error, wherein a linear code is **characterized by** its generator matrix, G, and parity check matrix, H of size M × N, with M and N being natural numbers:

$$\mathbf{c = Gb},$$

$$\mathbf{Hc = 0},$$

with **b** being a vector of information bits and a set A = {[λm,1, ... , λm,p, ... , λm,P]} with P being a natural number, the set A being a set of M vectors with the p-th column indices of the nonzero elements of the m-th row of the parity check matrix in such a way that:

$$\sum_{\substack{k_i=1,\\ \{k_1,...,k_P\}\in\mathcal{A}}}^{P} c(k_i) = 0$$

and

$$\sum_{\substack{k_i=1,}} c(k_i) = \left\{ \begin{array}{c} 0 \\ 1 \end{array} \right.$$

$$\{k_1,...,k_P\}\notin\mathcal{A}$$

such that an l-th tap of a channel is estimated by using a $P_q$ th-order moment according to

$$\xi_l^q = E\left\{ r\left(\pi_{m,q}+l\right)\prod_{\substack{i=1\\i\neq q}}^{\tilde{P}+1} r\left(\pi_{m,i}+v\right)\prod_{\substack{i=\tilde{P}+1\\i\neq q}}^{P} r^*\left(\pi_{m,i}+v\right)\right\},$$

wherein P~ = (P+1)/2 ; q = {1, ... , p, ..., P}, with q and l natural numbers, and *v* are the estimated value and the estimated position of a strongest tap of the channel wherein by setting l = v a main tap of the channel is estimated and afterwards other taps are calculated as a function of an absolute value of the main tap for l ≠ v, such that the estimated value of the main tap is given by

$$\widehat{h}_l = \frac{1}{P} \sum_{q=1}^{P} \xi_l^q.$$

**Patentansprüche**

1. Verfahren zur Auswahl von Übertragungskanälen in einem Mehrkanalkommunikationssystem zur Verwendung für Datenübertragung, wobei Daten s(k) zu einem Zeitpunkt k gesendet werden, die Daten s(k) empfangen werden, wobei r(k) Daten bezeichnet, die zu dem Zeitpunkt k empfangen werden, und wobei ein Vergleich zwischen gesendeten Daten und empfangenen Daten gemäß der folgenden Formel erfolgt:

$$r(k) = \sum_{l=0}^{L-1} h(l)s(k-l) + n(k)$$

wobei h(0) ... h(L-1) eine Kanalimpulsantwort mit einer Länge L bezeichnet und n(k) Störsignale am Empfänger bezeichnet,
**dadurch gekennzeichnet,**
**dass** ein Blind Channel Estimator zum Empfang eines Feedbacks von einem Decoder mit einem Restfehler für einen geschätzten Abgriff aufgrund einer Verwendung eines Zeitdurchschnitts anstatt eines wahren Erwartungswerts modifiziert wird, wobei eine nachträgliche Ausgabe des Decoders $L^D$(c), wobei c ein Vektor von kodierten Bits ist, und Kanalabgriffe, die in einer vorherigen Iteration eines Turbo-Equalizers h geschätzt wurden, zur Auslöschung des Restfehlers verwendet werden,
wobei ein linearer Code durch seine Erzeugermatrix G und Paritätsprüfmatrix H der Größe M $\times$ N gekennzeichnet wird, wobei M und N natürliche Zahlen sind:

$$c = Gb,$$

$$Hc = 0$$

wobei b ein Vektor von Informationsbits ist und eine Menge A = {[$\lambda$m, 1,..., $\lambda$m, p, ...., Am, P]} ist, wobei P eine natürliche Zahl ist, wobei die Menge A eine Menge aus M Vektoren mit den p-ten Spaltenindizes der Elemente ungleich 0 der m-ten Reihe der Paritätsprüfmatrix derart ist, dass:

$$\sum_{\substack{k_i=1, \\ \{k_1,...,k_P\} \in \mathcal{A}}}^{P} c(k_i) = 0$$

und

$$\sum_{\substack{k_i=1, \\ \{k_1,...,k_P\} \notin \mathcal{A}}} c(k_i) = \left\{ \begin{array}{c} 0 \\ 1 \end{array} \right.$$

so dass ein l-ter Abgriff eines Kanals mittels eines Moments $P_q$-ter Ordnung gemäß

$$\xi_l^q = E\left\{ r\left(\pi_{m,q}+l\right)\prod_{\substack{i=1\\i\neq q}}^{\tilde{P}+1} r\left(\pi_{m,i}+v\right)\prod_{\substack{i=\tilde{P}+1\\i\neq q}}^{P} r^*\left(\pi_{m,i}+v\right)\right\}$$

geschätzt werden kann, wobei $\tilde{P} = (P+1)/2$; $q = \{1, ..., p, ..., P\}$, wobei q und l natürliche Zahlen sind, und v der geschätzte Wert und die geschätzte Position eines stärksten Abgriffs des Kanals sind, wobei durch Einstellen von l = v ein Hauptabgriff des Kanals geschätzt wird und danach andere Abgriffe als Funktion eines Betrags des Hauptabgriffs für l ≠ v berechnet werden, so dass der Schätzwert des Hauptabgriffs gegeben ist durch:

$$\widehat{h}_l = \frac{1}{P}\sum_{q=1}^{P}\xi_l^q.$$

2. Sendeempfänger, aufweisend einen Sender und einen Empfänger zur Single Carrier Kommunikation über Mehrwegekanäle, bei dem der Sender durch einen mehrstufigen Kodierer gebildet ist, wobei der Empfänger durch einen Blind Turbo Equalizer gebildet ist, der eingerichtet ist, Übertragungskanäle in einem Mehrkanalkommunikationssystem zur Verwendung zur Datenübertragung auszuwählen, wobei Daten s(k) zu einem Zeitpunkt k gesendet werden, die Daten s(k) empfangen werden, wobei r(k) Daten bezeichnet, die zum Zeitpunkt k empfangen werden, und wobei der Blind Turbo Equalizer eingerichtet ist, die gesendeten Daten und die empfangenen Daten gemäß der Formel zu vergleichen:

$$r(k) = \sum_{l=0}^{L-1} h(l)s(k-l) + n(k)$$

wobei h(0) ... h(L-1) eine Kanalimpulsantwort mit einer Länge L bezeichnet und n(k) Störsignale am Empfänger bezeichnet,
**dadurch gekennzeichnet,**
**dass** der Blind Turbo Equalizer eingerichtet ist, einen Blind Channel Estimator zum Empfang eines Feedbacks von einem Decoder mit einem Restfehler für einen geschätzten Abgriff aufgrund einer Verwendung eines Zeitdurchschnitts anstatt eines wahren Erwartungswerts zu modifizieren, wobei eine nachträgliche Ausgabe des Decoders $L^D(c)$, wobei c ein Vektor von kodierten Bits ist, und Kanalabgriffe, die in einer vorherigen Iteration eines Turbo-Equalizers h geschätzt wurden, zur Auslöschung des Restfehlers verwendet werden,
wobei ein linearer Code durch seine Erzeugermatrix G und Paritätsprüfmatrix H der Größe M × N gekennzeichnet ist, wobei M und N natürliche Zahlen sind:

$$c = Gb,$$

$$Hc = 0$$

wobei **b** ein Vektor von Informationsbits ist und eine Menge A = {[λm, 1, ..., λm, p, ..., λm, P]} ist, wobei P eine natürliche Zahl ist, wobei die Menge A eine Menge aus M Vektoren mit den p-ten Spaltenindizes der Elemente ungleich 0 der m-ten Reihe der Paritätsprüfmatrix derart ist, dass:

$$\sum_{\substack{k_i=1,\\\{k_1,...,k_P\}\in\mathcal{A}}}^{P} c(k_i) = 0$$

und

$$\sum_{\substack{k_i=1,\\ \{k_1,\ldots,k_P\}\notin\mathcal{A}}} c(k_i) = \left\{ \begin{array}{c} 0 \\ 1 \end{array} \right.$$

$$\{k_1,\ldots,k_P\}\notin\mathcal{A}$$

so dass ein I-ter Abgriff eines Kanals mittels eines Moments $P_q$-ter Ordnung gemäß

$$\xi_l^q = E\left\{ r\left(\pi_{m,q}+l\right)\prod_{\substack{i=1\\i\neq q}}^{\tilde{P}+1} r\left(\pi_{m,i}+v\right)\prod_{\substack{i=\tilde{P}+1\\i\neq q}}^{P} r^*(\pi_{m,i}+v) \right\}$$

geschätzt wird, wobei $P\!\sim$ = (P+1)/2; q = {1, ..., p, ..., P}, wobei q und I natürliche Zahlen sind, und v der geschätzte Wert und die geschätzte Position eines stärksten Abgriffs des Kanals sind, wobei durch Einstellen von I = v ein Hauptabgriff des Kanals geschätzt wird und danach andere Abgriffe als Funktion eines Betrags des Hauptabgriffs für I ≠ v berechnet werden, so dass der Schätzwert des Hauptabgriffs gegeben ist durch:

$$\widehat{h_l} = \frac{1}{P}\sum_{q=1}^{P}\xi_l^q.$$

## Revendications

1. Procédé de sélection de canaux de transmission dans un système de communication multi-canaux destiné à être utilisé pour une transmission de données dans lequel des données s(k) sont envoyées à un moment k, les données s(k) sont reçues, dans lequel r(k) désigne des données qui sont reçues au moment k, et dans lequel une comparaison entre des données envoyées et des données reçues se produit selon la formule :

$$r(k) = \sum_{l=0}^{L-1} h(l)s(k-l) + n(k)$$

dans lequel h(0)... h(L-1) désigne une réponse d'impulsion de canal avec une longueur L et n(k) désigne des signaux de bruit au niveau du récepteur, **caractérisé en ce que,**
un estimateur de canal aveugle est modifié pour recevoir un retour d'informations d'un décodeur avec une erreur résiduelle pour une prise estimée en raison d'une utilisation d'une moyenne de temps au lieu d'une attente véritable, dans lequel une sortie a posteriori du décodeur, $L^D(c)$, c étant un vecteur de bits codés, et des prises de canaux estimées dans une itération précédente d'un turbo-égaliseur h sont utilisées pour annuler l'erreur résiduelle, dans lequel un code linéaire est **caractérisé par** sa matrice de générateur, G, et matrice de contrôle de parité, H de taille M x N, M et N étant des nombres naturels :

$$c = Gb,$$

$$Hc = 0,$$

**b** étant un vecteur de bits d'information et un ensemble A = {[$\lambda$m, 1, ..., $\lambda$m, p, ..., $\lambda$m, P]}, P étant un nombre naturel, l'ensemble A étant un ensemble de M vecteurs avec des indices de p$^e$ colonne des éléments non nuls de la m$^e$ rangée de la matrice de contrôle de parité de sorte que :

$$\sum_{\substack{k_i=1, \\ \{k_1,\dots,k_P\}\in\mathcal{A}}}^{P} c(k_i) = 0$$

et

$$\sum_{\substack{k_i=1, \\ \{k_1,\dots,k_P\}\notin\mathcal{A}}} c(k_i) = \left\{ \begin{array}{l} 0 \\ 1 \end{array} \right.$$

de sorte qu'une $l^e$ prise d'un canal peut être estimée au moyen d'un moment de $P_q^e$ ordre selon

$$\xi_l^q = E\left\{ r\left(\pi_{m,q}+l\right)\prod_{\substack{i=1 \\ i\neq q}}^{\breve{P}+1} r\left(\pi_{m,i}+v\right)\prod_{\substack{i=\breve{P}+1 \\ i\neq q}}^{P} r^*\left(\pi_{m,i}+v\right)\right\}$$

dans lequel $P{\sim}$ = (P+1)/2 ; q = {1, ..., p, ..., P}, q et l des entiers naturels, et v sont la valeur estimée et la position estimée d'une plus forte prise du canal dans lequel en définissant l = v une prise principale du canal est estimée et ensuite d'autres prises sont calculées en fonction d'une valeur absolue de la prise principale pour l ≠ v, de sorte que la valeur estimée de la prise principale est donnée par

$$\widehat{h_l} = \frac{1}{P}\sum_{q=1}^{P} \xi_l^q.$$

2. Émetteur/récepteur comprenant un émetteur et un récepteur pour une communication à porteuse unique travaillant sur des canaux multi-trajets, où l'émetteur est composé par un encodeur multi-niveaux, dans lequel le récepteur est composé par un turbo-égaliseur aveugle adapté à sélectionner des canaux de transmission dans un système de communication multi-canaux destiné à être utilisé dans une transmission de données dans lequel des données s(k) sont envoyées à un moment k, les données s(k) sont reçues, dans lequel r(k) désigne des données qui sont reçues au moment k, et dans lequel le turbo-égaliseur aveugle est adapté à comparer des données envoyées et des données reçues selon la formule :

$$r(k) = \sum_{l=0}^{L-1} h(l)s(k-l) + n(k)$$

dans lequel h(0)... h(L-1) désigne une réponse d'impulsion de canal avec une longueur (L) et n(k) désigne des signaux de bruit au niveau du récepteur, **caractérisé en ce que,**
le turbo-égaliseur aveugle est adapté à modifier un estimateur de canal aveugle pour recevoir un retour d'informations d'un décodeur avec une erreur résiduelle pour une prise estimée en raison d'une utilisation d'une moyenne de temps au lieu d'une attente véritable, dans lequel une sortie a posteriori du décodeur, $L^D(c)$, c étant un vecteur de bits codés, et des prises de canal estimées dans une itération précédente d'un turbo-égaliseur, h sont utilisées pour annuler l'erreur résiduelle, dans lequel un code linéaire est **caractérisé par** sa matrice de générateur, G, et matrice de contrôle de parité, H de taille M × N, M et N étant des nombres naturels :

$$\mathbf{c = Gb,}$$

$$\mathbf{Hc = 0,}$$

**b** étant un vecteur de bits d'information et un ensemble A = {[λm, 1, ..., λm, p, ..., λm, P]}, P étant un entier naturel, l'ensemble A étant un ensemble de M vecteurs avec des indices de p$^e$ colonne des éléments non nuls de la m$^e$ rangée de la matrice de contrôle de parité de sorte que :

$$\sum_{\substack{k_i=1,\\\{k_1,\dots,k_P\}\in\mathcal{A}}}^{P} c(k_i) = 0$$

et

$$\sum_{k_i=1,} c(k_i) = \left\{ \begin{array}{c} 0 \\ 1 \end{array} \right.$$

$$\{k_1,\dots,k_P\}\notin\mathcal{A}$$

de sorte qu'une l$^e$ prise d'un canal est estimée par l'utilisation d'un moment de P$_q$$^e$ ordre selon

$$\xi_l^q = E\left\{ r\left(\pi_{m,q}+l\right) \prod_{\substack{i=1\\i\neq q}}^{\tilde{P}+1} r\left(\pi_{m,i}+v\right) \prod_{\substack{i=\tilde{P}+1\\i\neq q}}^{P} r^*\left(\pi_{m,i}+v\right) \right\},$$

dans lequel P~ = (P+1)/2 ; q = {1, ..., p, ..., P}, q et l des entiers naturels, et v sont la valeur estimée et la position estimée d'une plus forte prise du canal dans lequel en définissant l = v une prise principale du canal est estimée et ensuite d'autres prises sont calculées en fonction d'une valeur absolue de la prise principale pour l ≠ v, de sorte que la valeur estimée de la prise principale est donnée par

$$\widehat{h}_l = \frac{1}{P} \sum_{q=1}^{P} \xi_l^q.$$

$b_1(i) \rightarrow$ Encoder $\xrightarrow{c_1(n)}$ interleaver $\xrightarrow{c'_1(n)}$ $-2*c'_1(n)+1$ $\xrightarrow{x_1(n)}$ Mapper $\xrightarrow{s(n)}$

$b_q(i) \rightarrow$ Encoder $\xrightarrow{c_q(n)}$ interleaver $\xrightarrow{c'_q(n)}$ $-2*c'_q(n)+1$ $\xrightarrow{x_q(n)}$

## Fig.1

Level 1
+
Level 2
=
Tx signal

## Fig.2

Fig.3

Fig.4

Fig.5

Fig.6

**Fig.7**

**Fig.8**

Fig.9

Fig.10

Fig.11

Fig.12

Fig.13

Fig.14

Fig.15

Fig.16

Fig.17

Fig.18

Fig.19

Fig.20

Fig.21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Y.GONG.** A novel channel estimator for a superposition-based cooperative system. *14th European Signal Processing Conference in Florence,* 04 September 2006
- On phase correct blind deconvolution exploiting channel coding. **A. SCHERB et al.** SIGNAL PROCESSING AND INFORMATION TECHNOLOGY, 2003. ISSPIT 2003. PROCEEDINGS OF THE 3RD IEEE INTERNATIONAL SYMPOSIUM ON DARMSTADT. IEEE, 14 December 2003, 518-521
- **A. F. SANTOS ; W RAVE ; G. FETTWEIS.** Blind Turbo Channel Estimation Exploiting Parity Check Equations. *7th International ITG Conference on Source and Channel Coding (SCC 08),* 2008
- **C. BERROU ; A. GLAVIEUX ; P. THITIMAJSHIMA.** Near Shannon limit error-correcting coding and decoding: Turbo-codes. *IEEE Int. Conf. on Communications, ICC'93,* 1993
- **C. DOUILLARD ; M. JEZEQUEL ; C. BERROU ; A. PICART ; P. DIDIER ; A. GLAVIEUX.** Iterative correction of intersymbol interference: Turboequalization. *European Trans. on Telecommunications,* 1995, vol. 6 (5), 507-511
- **M. T'UCHLER ; R. KOETTER ; AC SINGER.** Turbo equalization: principles and new results. *IEEE Trans. on Communications,* 2002, vol. 50 (5), 754-767
- **G.B. GIANNAKIS ; Y. HUA ; P. STOICA ; L. TONG.** Signal ProcessingAdvances in Wireless and Mobile Communications: Trends in Channel Estimation and Equalization. Prentice-Hall Inc, 2001, vol. 1
- **A. SCHERB ; V. KUHN ; K.D. KAMMEYER.** On phase correct blind deconvolution exploiting channel coding. *IEEE International Symposium on Signal Processing and Information Technology,* 2003
- **A. SCHERB ; V. KUHN ; K.D. KAMMEYER.** On Phase Correct Blind Deconvolution of Flat MIMO Channels Exploiting Channel Encoding. *Acoustics, Speech, and Signal Processing, 2005. Proceedings.(ICASSP'05). IEEE International Conference on,* 2005, vol. 3
- **W. RAVE ; A. F. SANTOS ; G. FETTWEIS.** Statistics of a Blind Channel Estimator based on 'Logic Strings. *7th International ITG Conference on Source and Channel Coding (SCC 08),* 2008

- Alldigital PAM impulse radio for multiple-access throughfrequency-selective multipath. **CJ LE MARTRET ; GB GIANNAKIS.** Global Telecommunications Conference, 2000. GLOBECOM'00. IEEE, 2000, vol. 1
- Wireless broadband single-carrier systems with MMSE turbo equalization receivers. **K. KANSANEN.** Ph.D. thesis. University of Oulu, 2005
- Iterative demapping and decoding for multilevel modulation. **S.S. TEN BRINK ; J.R.H. YAN.** Global Telecommunications Conference, 1998. GLOBECOM 98. The Bridge to Global Integration. IEEE, 1998, vol. 1
- **D. GODARD.** Self-Recovering Equalization and Carrier Tracking in Two-Dimensional Data Communication Systemes. *IEEE Trans. Comm.,* 1980, vol. 28
- **L. TONG ; S. PERREAU.** Multichannel Blind Identification: From Subspace to Maximum Likelihood Methods. *IEEE Proceedings,* October 1998, vol. 86, 1951-1968
- **A. SCHERB ; V. KU¨HN ; K. D. KAMMEYER.** On Phase Correct Blind Deconvolution exploiting Channel Coding. *ISSPIT '03,* December 2003
- **A. F. DOS SANTOS ; W. RAVE ; G. FETTWEIS.** Blind Turbo Channel Estimation Exploiting Parity Check Equations. *7 ITG Conf. on Source and Channel Coding,* 2008
- **M. ABRAMOWITZ ; I. STEGUN.** Handbook of Mathematical Functions. Dover Publications, 1968
- **B. JELONNEK ; D. BOSS ; K.D. KAMMEYER.** Eigenvector Algorithm for Blind MA System Identification. *Elsevier Signal Processing,* April 1998, vol. 66 (1), 1-26
- **O. SHALVI ; E. WEINSTEIN.** Super-exponential methods for blind deconvolution. *IEEE Trans. on Information Theory,* March 1993, vol. 39, 504-519
- **L. TONG ; S. PERREAU.** Multichannel Blind Identification: From Subspace to Maximum Likelihood Methods. *IEEE Proceedings,* October 1998, vol. 86 (10), 1951-1968
- **C.H. CHEN ; C.Y. CHI ; C.Y. CHEN ; C.C. FENG.** Batch Processing Algorithms for Blind Equalization using Higher Order Statistics. *IEEE Signal Processing Magazine,* January 2003, vol. 20 (1), 25-49

- **J. MANNERKOSKI ; V. KOIVUNEN.** Autocorrelation properties of channel encoded sequences- Applicability to blind equalization. *IEEE Trans. on Signal Processing,* December 2000, vol. 48, 3501-3507

- Fundamentals of Statistical Signal Processing. **S.M. KAY.** Estimation Theory. Prentice Hall PTR, 1993